(19) Europäisches Patentamt
European Patent Office
Office européen des brevets

(11) EP 4 624 539 A1

(12) # EUROPEAN PATENT APPLICATION

(43) Date of publication:
**01.10.2025 Bulletin 2025/40**

(21) Application number: **25164938.0**

(22) Date of filing: **20.03.2025**

(51) International Patent Classification (IPC):
***C09D 11/101*** *(2014.01)* ***B41M 5/00*** *(2006.01)*
***C09D 11/30*** *(2014.01)* ***C09D 11/322*** *(2014.01)*

(52) Cooperative Patent Classification (CPC):
**C09D 11/101; B41M 5/0047; C09D 11/30; C09D 11/322**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2024 JP 2024050489**
**16.05.2024 JP 2024080184**

(71) Applicant: **FUJIFILM Corporation**
**Tokyo 106-8620 (JP)**

(72) Inventors:
- **SETO, Yuki**
**Kanagawa, 258-8577 (JP)**
- **SHIRAKI, Fumiya**
**Kanagawa, 258-8577 (JP)**
- **UMEBAYASHI, Tsutomu**
**Kanagawa, 258-8577 (JP)**

(74) Representative: **Klunker IP Patentanwälte PartG mbB**
**Destouchesstraße 68**
**80796 München (DE)**

(54) **INK JET INK, IMAGE RECORDING METHOD, AND MANUFACTURING METHOD OF LAMINATE**

(57) The ink jet ink that contains a polymerizable monomer and an α-aminoketone-type photopolymerization initiator having a molecular weight of 600 or more, in which a weighted average value of a glass transition temperature of a homopolymer of the polymerizable monomer is 0°C to 50°C, and applications thereof are provided.



Processed by Luminess, 75001 PARIS (FR)

## Description

BACKGROUND OF THE INVENTION

1. Field of the Invention

The present disclosure relates to an ink jet ink, an image recording method, and a manufacturing method of a laminate.

2. Description of the Related Art

In the related art, various studies have been conducted on image recording with an ink jet ink.
For example, JP2011-122063A discloses an ultraviolet curable-type ink jet ink (that is, an ultraviolet ray-curable ink jet ink) which is excellent in jettability, curability, and flexibility, in which, in an ink jet ink consisting of at least (A) dipropylene glycol diacrylate, (B) N-vinylcaprolactam, and (C) a monofunctional acrylic monomer having a Tg of lower than 20°C, a total of formulation amounts of (A), (B), and (C) is 60% to 90% by weight and a formulation amount of a monofunctional acrylic monomer having a Tg of 20°C or higher is less than 10% by weight in all ink components.

SUMMARY OF THE INVENTION

In some cases, a laminate is manufactured by laminating an image recorded material which is obtained by applying an ink jet ink onto a base material for image recording, containing a polymer including vinyl chloride as a constitutional unit (for example, polyvinyl chloride), to record an image, and a lamination base material containing a polymer including vinyl chloride as a constitutional unit (for example, polyvinyl chloride) in an arrangement in which the image in the image recorded material and the lamination base material face each other. In this case, it may be required to improve a lamination strength between the image and the base material for lamination.
On the other hand, the image recorded material may be required to have blocking resistance of the image (that is, performance of suppressing blocking).
In general, in a case where the lamination strength between the image and the base material for lamination is improved, the blocking resistance of the image tends to be easily lowered; and in a case where the blocking resistance of the image is improved, the lamination strength of the image tends to be easily lowered.
The present disclosure has been made in view of such circumstances, and an object to be achieved by one embodiment of the present disclosure is to provide an ink jet ink, an image recording method, and a manufacturing method of a laminate, with which an image having excellent lamination strength and excellent blocking resistance can be recorded.
The present disclosure includes the following aspects.

<1> An ink jet ink comprising:

a polymerizable monomer; and
an α-aminoketone-type photopolymerization initiator having a molecular weight of 600 or more,
in which a weighted average value of a glass transition temperature of a homopolymer of the polymerizable monomer is 0°C to 50°C.

<2> The ink jet ink according to <1>, further comprising:

an acylphosphine oxide-type photopolymerization initiator,
in which a content mass ratio of the α-aminoketone-type photopolymerization initiator having a molecular weight of 600 or more to the acylphosphine oxide-type photopolymerization initiator is 0.010 to 1.5.

<3> The ink jet ink according to <1> or <2>, further comprising:

a sensitizing dye,
in which a content mass ratio of the α-aminoketone-type photopolymerization initiator having a molecular weight of 600 or more to the sensitizing dye is 0.010 to 2.0.

<4> The ink jet ink according to any one of <1> to <3>,
in which the polymerizable monomer includes an N-vinyl compound.
<5> The ink jet ink according to <4>,

in which a mass ratio of an amount of the N-vinyl compound to a total amount of the polymerizable monomer is 0.30 or more.

<6> The ink jet ink according to any one of <1> to <5>,

in which the polymerizable monomer includes a monomer M1 having a glass transition temperature of 90°C or higher in a case of being homopolymerized and a monomer M2 having a glass transition temperature of 30°C or lower in a case of being homopolymerized, and
a content of the monomer M1 with respect to a total amount of the ink jet ink is 20% by mass to 50% by mass, and a content of the monomer M2 with respect to the total amount of the ink jet ink is 35% by mass to 65% by mass.

<7> The ink jet ink according to any one of < 1 > to <6>,

in which the polymerizable monomer includes a monomer A which has a (meth)acryloyl group, has a molecular weight of 215 or less, and has a solubility parameter of 16.5 $MPa^{1/2}$ to 21.5 $MPa^{1/2}$, and
a mass ratio of an amount of the monomer A to a total amount of the polymerizable monomer is 0.50 or more.

<8> The ink jet ink according to any one of <1> to <7>,

in which the polymerizable monomer includes a compound having a molecular weight of 215 or less, and
a mass ratio of an amount of the compound having a molecular weight of 215 or less to a total amount of the polymerizable monomer is 0.80 or more.

<9> The ink jet ink according to any one of <1> to <8>,

in which the polymerizable monomer includes a monofunctional monomer, and
a mass ratio of an amount of the monofunctional monomer to a total amount of the polymerizable monomer is 0.90 or more.

<10> The ink jet ink according to any one of <1> to <9>,

in which the polymerizable monomer includes a compound having two or more (meth)acryloyl groups, and
a mass ratio of an amount of the compound having two or more (meth)acryloyl groups to the total amount of the polymerizable monomer is more than 0 and 0.10 or less.

<11> The ink jet ink according to <7> or <8>,

in which the polymerizable monomer includes a monomer B which is a compound having two or more (meth) acryloyl groups and different from the monomer A, and
a mass ratio of an amount of the monomer B with respect to the total amount of the polymerizable monomer is more than 0 and 0.10 or less.

<12> The ink jet ink according to any one of <1> to <11>, further comprising:
a resin T including at least one selected from the group consisting of a fluorinated hydrocarbon group, a polysiloxane group, and a hydrocarbon group having 12 or more carbon atoms.
<13> The ink jet ink according to <12>,
in which the resin T has a structural unit derived from hydroxyethyl methacrylate.
<14> An image recording method comprising:
a step of applying the ink jet ink according to any one of <1> to <13> onto a base material for image recording, containing a polymer including vinyl chloride as a constitutional unit, by an ink jet recording method to record an image.
<15> A manufacturing method of a laminate, comprising:

a step of obtaining an image recorded material including the base material for image recording and the image by the image recording method according to <14>; and
a step of laminating the image recorded material and a base material for lamination, containing a polymer including vinyl chloride as a constitutional unit, in an arrangement in which the image in the image recorded material and the base material for lamination face each other, to obtain a laminate.

According to one embodiment of the present disclosure, there are provided an ink jet ink, an image recording

method, and a manufacturing method of a laminate, with which an image having excellent lamination strength and excellent blocking resistance can be recorded.

DESCRIPTION OF THE PREFERRED EMBODIMENTS

In the present specification, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferred aspects is a more preferred aspect.

In the present specification, the meaning of the term "step" includes not only an independent step but also a step whose intended purpose is achieved even in a case where the step is not clearly distinguished from other steps.

In the present specification, the term "image" denotes an entire film formed by applying an ink (that is, an ink film), and the term "image recording" denotes formation of the image (that is, the ink film).

The concept of "image" in the present specification also includes a solid image.

In the present specification, "(meth)acrylate" is a concept including both acrylate and methacrylate. In addition, "(meth)acryl" is a concept that includes both acryl and methacryl.

Ink Jet Ink

The ink jet ink (hereinafter, also simply referred to as "ink") according to the present disclosure is an ink containing a polymerizable monomer and an $\alpha$-aminoketone-type photopolymerization initiator having a molecular weight of 600 or more, in which a weighted average value of a glass transition temperature of a homopolymer of the polymerizable monomer is 0°C to 50°C.

As described above, in general, in a case where a lamination strength of the image is improved, blocking resistance of the image tends to be easily lowered; and in a case where the blocking of the image is suppressed (that is, the blocking resistance is improved), the lamination strength of the image tends to be insufficient.

In the present disclosure, the lamination strength of the image means a lamination strength between the image and a base material for lamination in a case where a laminate is manufactured by laminating an image recorded material which is obtained by applying the ink onto a base material for image recording, containing a polymer including vinyl chloride as a constitutional unit (for example, polyvinyl chloride), to record an image, and a base material for lamination, containing a polymer including vinyl chloride as a constitutional unit (for example, polyvinyl chloride), in an arrangement in which the image in the image recorded material and the base material for lamination face each other.

In the present disclosure, the blocking means a phenomenon in which, in a case where a base material (for example, a base material for image recording) is superimposed on an image recorded on the base material for image recording, the image and the base material superimposed on the image are firmly stuck and difficult to peel off.

In the present disclosure, the blocking resistance means a performance of suppressing the blocking.

Regarding the above-described problem, with the ink according to the present disclosure, an image having excellent lamination strength and excellent blocking resistance can be recorded.

The reason why such an effect is exhibited is presumed as follows.

**In** the ink according to the present disclosure, it is considered that the weighted average value of the glass transition temperature (Tg) of the homopolymer of the polymerizable monomer contained in the ink (hereinafter, also simply referred to as "weighted average value of Tg") being 0°C or higher contributes to suppression of stickiness of the image, and as a result, contributes to the blocking resistance of the image. In addition, in the ink according to the present disclosure, it is considered that the weighted average value of Tg being 50°C or lower contributes to improvement of thermal plasticity of the image, and as a result, contributes to improvement of the lamination strength of the image.

However, it is found that, even in a case where the weighted average value of Tg is 0°C to 50°C, the image may be insufficient in blocking resistance. The reason for this is considered to be that curing properties in the vicinity of a surface of the ink film (that is, an interface with the air) may be insufficient.

Therefore, in a case where the weighted average value of Tg is 0°C to 50°C, the blocking is suppressed (that is, the blocking resistance is improved) by containing the $\alpha$-aminoketone-type photopolymerization initiator having a molecular weight of 600 or more in the ink. The reason for this is considered to be that the $\alpha$-aminoketone-type

photopolymerization initiator having a molecular weight of 600 or more particularly contributes to the curing properties in the vicinity of the surface of the ink film.

Hereinafter, the ink according to the present disclosure will be described in more detail.

Polymerizable Monomer

The ink according to the present disclosure contains at least one polymerizable monomer.

In the present disclosure, the polymerizable monomer refers to a compound having a polymerizable group and having a molecular weight of 1,000 or less.

Here, the molecular weight is calculated based on the kind and the number of atoms constituting the compound.

The polymerizable group in the polymerizable monomer is preferably an ethylenically unsaturated group (that is, a group including an ethylenic double bond), and more preferably a (meth)acryloyl group, an allyl group, a styryl group, or a vinyl group.

Weighted Average Value of Tg

In the ink according to the present disclosure, the weighted average value of the glass transition temperature (weighted average value of Tg) of the homopolymer of the polymerizable monomer is 0°C to 50°C.

In the present disclosure, the weighted average value of the glass transition temperatures (weighted average value of Tg) of homopolymers of the polymerizable monomers means a weighted average value of glass transition temperatures in a case where all kinds of the polymerizable monomers contained in the ink according to the present disclosure are homopolymers.

For example, in a case where the ink according to the present disclosure contains two or more kinds of the polymerizable monomers, the weighted average value of Tg means a weighted average value of glass transition temperatures in a case where each of the two or more kinds of the polymerizable monomers is a homopolymer.

In a case where the ink according to the present disclosure contains only one kind of the polymerizable monomer, the weighted average value of Tg means the glass transition temperature itself in a case where the one kind of the polymerizable monomer is a homopolymer.

The weighted average value of Tg in the ink according to the present disclosure means a value measured as follows.

A homopolymer having a weight-average molecular weight of 10,000 to 20,000 is produced for each of all (that is, all kinds of) polymerizable monomers contained in the ink, and the glass transition temperature of the produced homopolymer is measured according to the method described in JIS K 7121:2012.

In the present disclosure, the glass transition temperature is measured using a differential scanning calorimeter, for example, using a product name "DSC-60" manufactured by Shimadzu Corporation.

In the present disclosure, the weight-average molecular weight is measured by gel permeation chromatography (GPC). For example, HLC-8220GPC (manufactured by Tosoh Corporation) is used as GPC, three columns of TSKgel, SuperMultipore HZ-H (manufactured by Tosoh Corporation; 4.6 mmID x 15 cm) are used as a column, and tetrahydrofuran (THF) is used as an eluent. As the conditions, a sample concentration of 0.45% by mass, a flow rate of 0.35 ml/min, a sample injection amount of 10 $\mu$l, and a measurement temperature of 40°C are set, and a differential refractive index (RI) detector is used for detection. A calibration curve is obtained from, as a standard sample, eight samples of product names "TSK Standard polystyrene" manufactured by Tosoh Corporation: "F-40", "F-20", "F-4", "F-1", "A-5000", "A-2500", "A-1000", and "n-propylbenzene".

The glass transition temperature of the homopolymer varies depending on the weight-average molecular weight of the homopolymer, but the variation is negligibly small in a case where the weight-average molecular weight is 10,000 to 20,000.

The weighted average value of Tg is calculated by the following expression.

In the expression, $T_i$ represents a glass transition temperature in a case where an i-th polymerizable monomer contained in the ink is a homopolymer, and $C_i$ represents a content (% by mass) of the i-th polymerizable monomer with respect to the total amount of the ink.

$$\text{Weighted average value of glass transition temperatures} = \Sigma T_i C_i / \Sigma C_i$$

As described above, in a case where the weighted average value of Tg is 0°C or higher, blocking resistance of the image is improved.

From the viewpoint of further improving the blocking resistance of the image, the weighted average value of Tg is preferably 5°C or higher, more preferably 10°C or higher, and still more preferably 15°C or higher.

In addition, as described above, in a case where the weighted average value of Tg is 50°C or lower, the lamination strength of the image is improved.
From the viewpoint of further improving the lamination strength of the image, the weighted average value of Tg is preferably 45°C or lower and more preferably 40°C or lower.
From the viewpoint of more effectively achieving both the lamination strength and the blocking resistance, it is preferable that the polymerizable monomer in the ink according to the present disclosure includes a monomer M1 having a glass transition temperature of 90°C or higher in a case of being homopolymerized and a monomer M2 having a glass transition temperature of 30°C or lower in a case of being homopolymerized.
In a case where the ink according to the present disclosure contains the monomer M1, a content of the monomer M1 with respect to the total amount of the ink is preferably 20% by mass to 50% by mass.
In a case where the ink according to the present disclosure contains the monomer M2, a content of the monomer M2 with respect to the total amount of the ink is preferably 35% by mass to 65% by mass.

Functionality of Polymerizable Monomer

The polymerizable monomer may include a monofunctional monomer, may include a bi- or higher functional monomer, or may include both.
Here, the monofunctional monomer means a polymerizable monomer having only one polymerizable group, and the bi- or higher functional monomer means a polymerizable monomer having two or more polymerizable groups.
That is, an n-functional monomer in the present disclosure is a polymerizable monomer having n polymerizable groups.
From the viewpoint of further improving the lamination strength, in the ink according to the present disclosure, a mass ratio of the amount of the monofunctional monomer to the total amount of the polymerizable monomers (hereinafter, also referred to as a content mass ratio [monofunctional monomer/total polymerizable monomer]) is preferably 0.80 or more, more preferably 0.85 or more, still more preferably 0.90 or more, and even more preferably 0.95 or more.
The content mass ratio [monofunctional monomer/total polymerizable monomer] may be 1, or less than 1.
The content of the polymerizable monomer with respect to the total amount of the ink according to the present disclosure is preferably 50% by mass or more, more preferably 60% by mass or more, still more preferably 70% by mass or more, and even more preferably 80% by mass or more.
The total content of the monofunctional monomer and the bifunctional monomer with respect to the total amount of the ink according to the present disclosure is preferably 50% by mass or more, more preferably 60% by mass or more, still more preferably 70% by mass or more, and even more preferably 80% by mass or more.
In addition, a content of the monofunctional monomer with respect to the total amount of the ink according to the present disclosure is preferably 50% by mass or more, more preferably 60% by mass or more, still more preferably 70% by mass or more, and even more preferably 80% by mass or more.

Content Mass Ratio [Monomer having molecular weight of 215 or less/Total polymerizable monomer]

From the viewpoint of further improving the lamination strength, in the ink according to the present disclosure, a mass ratio of the amount of the polymerizable monomer having a molecular weight of 215 or less to the total amount of the polymerizable monomers contained in the ink (hereinafter, also referred to as a content mass ratio [monomer having molecular weight of 215 or less/total polymerizable monomer]) is preferably 0.80 or more, more preferably 0.85 or more, still more preferably 0.90 or more, and even more preferably 0.95 or more.
The content mass ratio [monomer having molecular weight of 215 or less/total polymerizable monomer] may be 1, or less than 1.

N-vinyl Compound

From the viewpoint of further improving the lamination strength, it is preferable that the polymerizable monomer in the ink according to the present disclosure contains at least one N-vinyl compound.

The ink contains at least one N-vinyl compound.

The N-vinyl compound is a compound in which a vinyl group is bonded to a nitrogen atom.
Since the N-vinyl compound has high solubility in the base material for image recording, the N-vinyl compound contributes to adhesiveness between the base material for image recording and the image.
Examples of the N-vinyl compound include N-vinylpyrrolidone, N-vinylcaprolactam, N-vinylcarbazole, N-vinylimidazole, N-vinylphthalimide, N-vinylacetamide, N-vinylformamide, and 5-methyl-3-vinyl-2-oxazolidinone.

Among these, from the viewpoint of high solubility in the base material for image recording and improvement of the adhesiveness between the base material for image recording and the image, the N-vinyl compound is preferably at least one selected from the group consisting of N-vinylcaprolactam and 5-methyl-3-vinyl-2-oxazolidinone.
A content of the N-vinyl compound is preferably 10% by mass to 50% by mass, more preferably 15% by mass to 40% by mass, and still more preferably 20% by mass to 30% by mass with respect to the total amount of the ink.
From the viewpoint of further improving the lamination strength, in the ink according to the present disclosure, a mass ratio of the amount of the N-vinyl compound to the total amount of the polymerizable monomers contained in the ink (hereinafter, also referred to as a content mass ratio [N-vinyl compound/total polymerizable monomer]) is preferably 0.15 or more, more preferably 0.20 or more, and still more preferably 0.30 or more.
The content mass ratio [N-vinyl compound/total polymerizable monomer] may be 1, but is preferably less than 1, more preferably 0.80 or less, and still more preferably 0.60 or less.

Monomer A

From the viewpoint of further improving the lamination strength, it is preferable that the polymerizable monomer in the ink according to the present disclosure includes at least one kind of a monomer A.
The monomer A is a polymerizable monomer having a (meth)acryloyl group, having a molecular weight of 215 or less, and having a solubility parameter of 16.5 $MPa^{1/2}$ to 21.5 $MPa^{1/2}$.
The molecular weight of the monomer A is 215 or less, preferably 205 or less and more preferably 200 or less.
The molecular weight of the monomer A being 215 or less refers to that the molecular weight is relatively low, and the ink is easily dissolved in the base material for image recording by setting the molecular weight to 215 or less. As a result, the adhesiveness between the base material for image recording and the ink film is improved, and the lamination strength is improved.
In addition, in a case where the molecular weight of the monomer A is 215 or less, a distance between crosslinking points is shortened and a density of the ink film is improved, so that the lamination strength is improved.
The lower limit value of the molecular weight of the monomer A is not particularly limited, but is, for example, 100.
The molecular weight is calculated based on the kind and the number of atoms constituting the compound.
The solubility parameter (hereinafter, also referred to as an SP value) of the monomer A is 16.5 $MPa^{1/2}$ to 21.5 $MPa^{1/2}$, preferably 18 $MPa^{1/2}$ to 19.5 $MPa^{1/2}$.
Since the SP value of the monomer A is 16.5 $MPa^{1/2}$ to 21.5 $MPa^{1/2}$, the ink has high affinity for the base material for image recording and has excellent solubility. Polymerization proceeds in a state in which a part of the ink is dissolved in the base material for image recording, so that the adhesiveness between the base material for image recording and the image is improved, and as a result, the lamination strength is improved.
In the present disclosure, the SP value of the monomer A means a Hansen solubility parameter. The Hansen solubility parameters are obtained by dividing the solubility parameters introduced by Hildebrand into three components, a dispersion element δd, a polarity element δp, and a hydrogen bond element δh, and expressing the parameters in a three-dimensional space.
The SP value δ of the monomer A is a value calculated by the following expression (A).

$$\text{SP value } (\delta)\ [\text{MPa}^{1/2}] = (\delta d^2 + \delta p^2 + \delta h^2)^{1/2} \ \ldots\ (A)$$

The dispersion element δd, the polarity element δp, and the hydrogen bond element δh are calculated using HSPiP (version 4.1.07) software.
The monomer A has a (meth)acryloyl group (preferably an acryloyl group), and more preferably has a (meth) acryloyloxy group (preferably an acryloyloxy group).
The above-described N-vinyl compound has high activity with respect to a polymerizable monomer having a (meth)acryloyl group, and the polymerization reaction proceeds rapidly. Since the monomer A has a (meth)acryloyl group, the polymerization reaction proceeds rapidly in the ink in a case of coexisting with the above-described N-vinyl compound, and thus curing properties are excellent.
The number of (meth)acryloyl groups in the monomer A may be only one or two or more, but is preferably only one (that is, the monomer A is preferably a monofunctional (meth)acrylate).
Examples of the monomer A include the following compounds.

Tetrahydrofurfuryl acrylate (SP value: 18.8 $MPa^{1/2}$)
Cyclic trimethylolpropane formal acrylate (SP value: 19.0 $MPa^{1/2}$)
Etoxyethyethygolicol acrylate (SP value: 18.2 $MPa^{1/2}$)
Cyclohexyl acrylate (SP value: 17.9 $MPa^{1/2}$)

Isobornyl acrylate (SP value: 17.1 $MPa^{1/2}$)
Phenoxyethyl acrylate (SP value: 19.44 $MPa^{1/2}$)
N,N-Dimethylacrylamide (SP value: 21.4 $MPa^{1/2}$)
4-tert-Butylcyclohexyl acrylate (SP value: 16.7 $MPa^{1/2}$)
3,3,5-Trimethylcyclohexyl acrylate (SP value: 16.7 $MPa^{1/2}$)
4-Hydroxydibutyl acrylate (SP value: 21.0 $MPa^{1/2}$)
2-Methyl-2-ethyl-1,3-dioxolan-4-yl)methyl acrylate (SP value: 18.2 $MPa^{1/2}$)
Benzyl acrylate (SP value: 19.0 $MPa^{1/2}$)
(3-Ethoxytetan-3-yl)methyl acrylate (SP value: 18.6 $MPa^{1/2}$)
2-Oxotetrahydrofuran-3-yl acrylate (SP value: 21.2 $MPa^{1/2}$)

Among these, from the viewpoint of improving the adhesiveness to the base material for image recording and adhesiveness to the base material for lamination, the monomer A preferably includes at least one selected from the group consisting of tetrahydrofurfuryl acrylate, cyclic trimethylolpropane formal acrylate, and ethoxydiethylene glycol acrylate; and more preferably includes at least one selected from the group consisting of tetrahydrofurfuryl acrylate and ethoxydiethylene glycol acrylate.

A content of the monomer A is preferably 30% by mass to 75% by mass, more preferably 40% by mass to 70% by mass, and still more preferably 44% by mass to 63% by mass with respect to the total amount of the ink.

From the viewpoint of further improving the lamination strength, in the ink according to the present disclosure, a mass ratio of the amount of the monomer A to the total amount of the polymerizable monomers contained in the ink (hereinafter, also referred to as a content mass ratio [monomer A/total polymerizable monomer]) is preferably 0.25 or more, more preferably 0.30 or more, still more preferably 0.40 or more, and even more preferably 0.50 or more.

The content mass ratio [monomer A/total polymerizable monomer] may be 1, or less than 1.

Other Polymerizable Monomers

The ink according to the present disclosure may contain a polymerizable monomer other than the monomer A and the N-vinyl compound, as other polymerizable monomers.

A polymerizable group included in the other polymerizable monomers is preferably a radically polymerizable group, more preferably a photoradically polymerizable group, and still more preferably an ethylenically unsaturated group. Examples of the other polymerizable monomers include a (meth)acrylate compound, a (meth)acrylamide compound, a vinyl ether compounds, an allyl compound, and an unsaturated carboxylic acid.

From the viewpoint of further improving the lamination strength, in the ink according to the present disclosure, a mass ratio of the total amount of the monomer A and the N-vinyl compound to the total amount of the polymerizable monomers contained in the ink (hereinafter, also referred to as a content mass ratio [(monomer A + N-vinyl compound)/-total polymerizable monomer]) is preferably 0.50 or more, more preferably 0.60 or more, still more preferably 0.70 or more, and even more preferably 0.80 or more.

The content mass ratio [(monomer A + N-vinyl compound)/total polymerizable monomer] may be 1, or less than 1.

Bi- or higher Functional (Meth)acrylate

From the viewpoint of further improving the lamination strength by crosslinking, it is preferable that the polymerizable monomer in the ink according to the present disclosure includes a compound having two or more (meth)acryloyl groups (that is, a bi- or higher functional (meth)acrylate).

As the compound having two or more (meth)acryloyl groups (that is, the bi- or higher functional (meth)acrylate), a compound having two (meth)acryloyl groups (that is, a bifunctional (meth)acrylate) is particularly preferable.

In addition, examples of the bi- or higher functional (meth)acrylate include a monomer B which is a compound having two or more (meth)acryloyl groups and different from the monomer A.

The monomer B is preferably a compound having two (meth)acryloyl groups (that is, a bifunctional (meth) acrylate).

Examples of the bifunctional (meth)acrylate (for example, the monomer B), which is the preferred aspect of the bi- or higher functional (meth)acrylate, include ethylene glycol di(meth)acrylate, diethylene glycol di(meth)acrylate, triethylene glycol di(meth)acrylate, propylene glycol di(meth)acrylate, dipropylene glycol di(meth)acrylate, tripropylene glycol di(meth)acrylate, polyethylene glycol di(meth)acrylate, polypropylene glycol di(meth)acrylate, butylene glycol di(meth) acrylate, tetraethylene glycol di(meth)acrylate, neopentyl glycol di(meth)acrylate, 3-methyl-1,5-pentanediol di(meth) acrylate, hexanediol di(meth)acrylate, heptanediol di(meth)acrylate, octanediol di(meth)acrylate, nonanediol di(meth) acrylate, decanediol di(meth)acrylate, dodecanediol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, and tricyclodecanedimethanol di(meth)acrylate.

From the viewpoint of further improving the lamination strength, in a case where the ink according to the present disclosure contains the bi- or higher functional (meth)acrylate (for example, the monomer B), a content of the bi- or higher functional (meth)acrylate is preferably 20% by mass or less, more preferably 10% by mass or less, still more preferably 5% by mass or less, and even more preferably 2.5% by mass or less with respect to the total amount of the ink.

From the viewpoint of further improving the lamination strength, the content of the bi- or higher functional (meth) acrylate is preferably more than 0% by mass, more preferably 0.01% by mass or more, still more preferably 0.05% by mass or more, and even more preferably 0.1% by mass or more.

From the viewpoint of further improving the lamination strength, in the ink according to the present disclosure, a mass ratio of the amount of the bi- or higher functional (meth)acrylate (for example, the monomer B) to the total amount of the polymerizable monomers contained in the ink (hereinafter, also referred to as a content mass ratio [bi- or higher functional (meth)acrylate (for example, monomer B)/total polymerizable monomer]) is preferably 0.20 or less, more preferably 0.10 or less, and still more preferably 0.05 or less.

From the viewpoint of further improving the lamination strength, the content mass ratio [bi- or higher functional (meth)acrylate (for example, monomer B)/total polymerizable monomer] is more than 0, preferably 0.0001 or more, more preferably 0.0005 or more, and still more preferably 0.001 or more.

Examples of a preferred aspect of the ink according to the present disclosure include an aspect in which the polymerizable monomer includes the monofunctional monomer and the bi-or higher functional (meth)acrylate, the content mass ratio [monofunctional monomer/total polymerizable monomer] is 0.90 or more, and the content mass ratio [bi- or higher functional (meth)acrylate/total polymerizable monomer] is more than 0 and 0.10 or less.

Examples of another preferred aspect of the ink according to the present disclosure include an aspect in which the polymerizable monomer includes the monomer A and the monomer B, the content mass ratio [monomer A/total polymerizable monomer] is 0.50 or more, and the content mass ratio [monomer B/total polymerizable monomer] is more than 0 and 0.20 or less (preferably more than 0 and 0.10 or less).

α-Aminoketone-type Photopolymerization Initiator having Molecular Weight of 600 or More

The ink according to the present disclosure contains at least one α-aminoketone-type photopolymerization initiator having a molecular weight of 600 or more.

In this manner, the curing properties in the vicinity of the surface of the ink film (that is, the interface with the air) are improved, and as a result, the blocking resistance of the image is improved.

In the present disclosure, the α-aminoketone-type photopolymerization initiator having a molecular weight of 600 or more is a photopolymerization initiator having an α-aminoketone structure and having a molecular weight of 600 or more.

The α-aminoketone structure refers to the following structure (AK) which is a structure in which an amino group is bonded to a carbon atom at an α-position of a ketone group. In the structure (AK), * represents a bonding position.

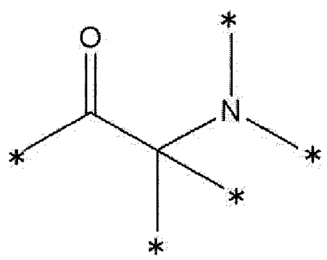

(AK)

The α-aminoketone-type photopolymerization initiator having a molecular weight of 600 or more preferably further has a polyalkyleneoxy group, more preferably has a polyalkyleneoxy group obtained by linking alkyleneoxy groups having 2 to 4 carbon atoms, and still more preferably has at least one of a polyethyleneoxy group or a polypropyleneoxy group.

The α-aminoketone-type photopolymerization initiator having a molecular weight of 600 or more preferably further has an aromatic ring structure.

The molecular weight of the α-aminoketone-type photopolymerization initiator having a molecular weight of 600 or more is preferably 800 or more.

The molecular weight of the α-aminoketone-type photopolymerization initiator having a molecular weight of 600 or more is preferably 1,800 or less.

For the structure of the α-aminoketone-type photopolymerization initiator having a molecular weight of 600 or

more, for example, known documents such as JP2009-197066A, WO2017/195428A, and JP2007-525573A can be referred to.

The α-aminoketone-type photopolymerization initiator having a molecular weight of 600 or more is, for example, a compound represented by Formula (AK1).

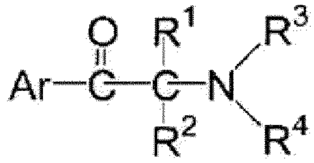

(AK1)

In Formula (AK1), Ar is a phenyl group substituted with -N($R^5$)($R^6$) or -C(=O)-N($R^5$)($R^6$).

$R^1$ and $R^2$ each independently represent an alkyl group having 1 to 8 carbon atoms. $R^1$ and $R^2$ may be bonded to each other to constitute an alkylene group having 2 to 9 carbon atoms. $R^3$ and $R^4$ each independently represent a hydrogen atom, an alkyl group having 1 to 12 carbon atoms, an alkyl group having 2 to 4 carbon atoms, substituted with alkoxy having 1 to 4 carbon atoms, or an alkenyl group having 3 to 5 carbon atoms. Here, $R^3$ and $R^4$ may be bonded to each other to form an alkylene group having 3 to 7 carbon atoms, and the alkylene group may include -O- or -N($R^7$)- in an alkylene chain, where $R^7$ represents an alkyl group having 1 to 4 carbon atoms.

$R^5$ and $R^6$ each independently represent a hydrogen atom, an alkyl group having 1 to 12 carbon atoms, an alkyl group having 2 to 4 carbon atoms, substituted with alkoxy having 1 to 4 carbon atoms, or an alkenyl group having 3 to 5 carbon atoms. Here, $R^5$ and $R^6$ may be bonded to each other to form an alkylene group having 3 to 7 carbon atoms, and the alkylene group may include -O- or -N($R^{11}$)- in an alkylene chain. Here, $R^{11}$ is a hydrogen atom, a hydroxyalkyl group having 1 to 4 carbon atoms, or a group represented by Formula (R11A).

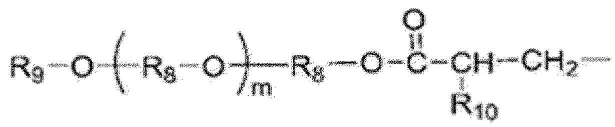

(R11A)

In Formula (R11A), $R^8$ represents an alkylene group having 2 to 4 carbon atoms, $R^9$ represents a hydrogen atom, a phenyl group, or an alkyl group having 1 to 4 carbon atoms, $R^{10}$ represents a hydrogen atom or a methyl group, and m represents an integer of 0 to 20.

A content of the α-aminoketone-type photopolymerization initiator having a molecular weight of 600 or more with respect to the total amount of the ink according to the present disclosure is preferably 0.010% by mass to 8.0% by mass, preferably 0.1% by mass to 5.0% by mass, more preferably 0.5% by mass to 4.0% by mass, and still more preferably 1.0% by mass to 3.5% by mass.

α-Aminoketone-type Photopolymerization Initiator having Molecular Weight of Less Than 600

The ink according to the present disclosure may contain at least one α-aminoketone-type photopolymerization initiator having a molecular weight of less than 600.

However, in a case where the ink according to the present disclosure contains the α-aminoketone-type photopolymerization initiator having a molecular weight of less than 600, a mass ratio of a content of the α-aminoketone-type photopolymerization initiator having a molecular weight of less than 600 to a content of the α-aminoketone-type photopolymerization initiator having a molecular weight of 600 or more is preferably less than 1, more preferably less than 0.5, still more preferably less than 0.1, and even more preferably less than 0.01.

Acylphosphine oxide-type Photopolymerization Initiator

The ink according to the present disclosure preferably contains at least one acylphosphine oxide-type photopolymerization initiator.

As a result, the lamination strength of the image is further improved.

A content mass ratio of the α-aminoketone-type photopolymerization initiator having a molecular weight of 600 or more to the acylphosphine oxide-type photopolymerization initiator (hereinafter, also referred to as a content mass ratio [α-aminoketone-type initiator having molecular weight of 600 or more/acylphosphine oxide-type initiator]) is preferably 0.005 to 2.0, more preferably 0.010 to 1.5, still more preferably 0.020 to 1.5, and even more preferably 0.3 to 1.5.

In a case where the content mass ratio [α-aminoketone-type initiator having molecular weight of 600 or more/acylphosphine oxide-type initiator] is 0.005 or more, the blocking resistance of the image is further improved.

In a case where the content mass ratio [α-aminoketone-type initiator having molecular weight of 600 or more/acylphosphine oxide-type initiator] is 2.0 or less, the lamination strength of the image is further improved.

Examples of the acylphosphine oxide-type photopolymerization initiator include a monoacylphosphine oxide

compound and a bisacylphosphine oxide compound, and a bisacylphosphine oxide compound is preferable.

Examples of the monoacylphosphine oxide compound include isobutyryl diphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyl diphenylphosphine oxide, benzoyl diphenylphosphine oxide, pivaloyl phenylphosphinic acid vinyl ester, adipoyl bisdiphenylphosphine oxide, pivaloyl diphenylphosphine oxide, p-toluyldiphenylphosphine oxide, 4-(t-butyl)benzoyldiphenylphosphine oxide, terephthaloyl bisdiphenylphosphine oxide, 2-methylbenzoyldiphenylphosphine oxide, versatoyl diphenylphosphine oxide, 2-methyl-2-ethylhexanoyldiphenylphosphine oxide, 1-methyl-cyclohexanoyldiphenylphosphine oxide, pivaloyl phenylphosphinic acid methyl ester, and pivaloyl phenylphosphinic acid isopropyl ester.

Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among these, as the acylphosphine oxide compound, it is preferable to contain at least one selected from the group consisting of bis(2,4,6-trimethylbenzoyl)phenylphosphine oxide (trade name "Omnirad 819", manufactured by IGM Resins B.V.), 2,4,6-trimethylbenzoyldiphenylphosphine oxide (trade name "Omnirad TPO-H", manufactured by IGM Resins B.V) and (2,4,6-trimethylbenzoyl)ethoxyphenylphosphine oxide (trade name "Omnirad TPO-L", manufactured by IGM Resins B.V.).

Other Photopolymerization Initiators

The ink according to the present disclosure may contain other photopolymerization initiators in addition to the $\alpha$-aminoketone-type photopolymerization initiator and the acylphosphine oxide-type photopolymerization initiator.

Examples of the other photopolymerization initiators include an alkylphenone compound other than the $\alpha$-aminoketone-type photopolymerization initiator, an aromatic onium salt compound, an organic peroxide, a thio compound, a hexaarylbiimidazole compound, a ketoxime ester compound, a borate compound, an azinium compound, a metallocene compound, an active ester compound, a carbon halogen bond-containing compound, and an alkylamine compound.

Sensitizing Dye

It is preferable that the ink according to the present disclosure contains at least one sensitizing dye.

As a result, the lamination strength of the image is further improved.

A content mass ratio of the sensitizing dye to the acylphosphine oxide-type photopolymerization initiator (hereinafter, also referred to as a content mass ratio [sensitizing dye/acylphosphine oxide-type initiator]) is preferably 0.005 to 5.0, more preferably 0.010 to 3.0, still more preferably 0.050 to 2.0, and even more preferably 0.1 to 2.0.

As the sensitizing dye, a thio compound is preferable, and a thioxanthone compound is more preferable.

Examples of the thioxanthone compound include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone (preferably, 2,4-diethylthioxanthen-9-one (DETX)), 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminthioxanthone, 1-ethoxycarbonyl-3-phenylsulfurylthioxanthone,Examples thereof include 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboxylimide, n-octylthioxanthone-3,4-dicarboxylimide, N-(1,1,3,3-tetramethylbutyl)thioxanthone-3,4-dicarboxylimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthone-2-yl)oxy-N,N,N-trimethyl-1-propanaminium chloride.

The thioxanthone compound may be a commercially available product. Examples of the commercially available product include SPEEDCURE series (for example, SPEEDCURE 7010, SPEEDCURE CPTX, SPEEDCURE ITX, and the like) manufactured by Lambson.

Resin

The ink preferably contains at least one resin. In the present disclosure, the "resin" does not have a polymerizable group. In the present disclosure, the resin having a polymerizable group corresponds to the "polymerizable compound" and is distinguished from the resin. In addition, the resin means a compound having a weight-average molecular weight of 1,000 or more.

Examples of the resin include an epoxy resin, a vinyl chloride-based resin, a polyester resin, an acrylic resin, a urethane resin, chlorinated polyolefin, and polyketone.

The vinyl chloride-based resin means a polymer including vinyl chloride as a constitutional unit. The vinyl chloride-based resin may be a homopolymer of vinyl chloride (that is, polyvinyl chloride), or may be a copolymer including vinyl chloride and a monomer other than the vinyl chloride as a constitutional unit.

Examples of a commercially available product of the vinyl chloride-based resin include UCAR Solution Vinyl Resin VYHD, VYHH, VMCA, VROH, and VYLF-X manufactured by Dow Chemical Company; SOLBIN resin CL, CNL, C5R, and TA5R manufactured by Nissin Chemical Co., Ltd.; and VINNOL (registered trademark) E15/40, E15/45, H14/36, H15/42, H15/50, H11/59, H40/43, H40/50, H40/55, H40/60, H15/45M, E15/45M, and E15/40A manufactured by Wacker Chemie AG.

Examples of a commercially available product of the polyester resin include Elitel series manufactured by UNITIKA Ltd.; VYLON series manufactured by TOYOBO Co., Ltd.; Espel series manufactured by Hitachi Chemical Co., Ltd.; and TEGO (registered trademark) addbond series manufactured by Evonik Industries AG.

Examples of the acrylic resin include a copolymer of methyl methacrylate and n-butyl methacrylate.

Examples of a commercially available product of the acrylic resin include Elvacite 2013 (a copolymer of methyl methacrylate and n-butyl methacrylate, Mw = 34,000), Elvacite 2014 (a copolymer of methyl methacrylate and n-butyl methacrylate, Mw = 119,000), and Elvacite 4099 (a copolymer of methyl methacrylate and n-butyl methacrylate, Mw = 15,000) manufactured by Lucite International Alpha B.V; and DIANAL (registered trademark) BR-113 (butyl methacrylate resin, Mw = 30,000) manufactured by Mitsubishi Chemical Corporation.

The urethane resin means a polymer having a urethane bond in the main chain. The urethane resin is produced, for example, by reacting a polyisocyanate compound with a polyol compound.

Examples of a commercially available product of the chlorinated polyolefin include SUPERCHLON (registered trademark) 814HS manufactured by Nippon Paper Industries Co., Ltd.

Examples of a commercially available product of the polyketone include TEGO (registered trademark) VARIPLUS AP, CA, and SK manufactured by Evonik Industries AG.

Among these, the ink preferably contains at least one selected from the group consisting of a vinyl chloride-vinyl acetate copolymer and a polyester resin. The vinyl chloride-vinyl acetate copolymer and the polyester resin have excellent affinity for the base material for image recording, and in a case where the ink contains these resins, the solubility of the ink in the base material for image recording is increased, and the adhesiveness between the base material for image recording and the image is improved.

Resin T

The ink according to the present disclosure preferably contains a resin T including at least one group selected from the group consisting of a fluorinated hydrocarbon group, a polysiloxane group, and a hydrocarbon group having 12 or more carbon atoms.

As a result, the solubility of the ink in the base material for image recording is high, and the adhesiveness between the base material for image recording and the image is improved.

The resin T is preferably an acrylic resin.

It is preferable that the resin T as the acrylic resin contains a constitutional unit A derived from a polymerizable compound A including at least one selected from the group consisting of a fluorinated hydrocarbon group, a polysiloxane group, and a hydrocarbon group having 12 or more carbon atoms, and contains a constitutional unit B derived from a polymerizable compound B having a polarity element of an HSP value of 4.8 $MPa^{1/2}$ or more.

Constitutional unit A

It is preferable that the resin T contains the constitutional unit A derived from the polymerizable compound A including at least one selected from the group consisting of a fluorinated hydrocarbon group, a polysiloxane group, and a hydrocarbon group having 12 or more carbon atoms. In this case, the resin T may contain only one kind of the constitutional unit A, or two or more kinds of constitutional units A.

A content of the constitutional unit A is 40% by mass or less with respect to the total amount of the resin T.

The content of the constitutional unit A is preferably more than 0% by mass with respect to the total amount of the resin T.

The fluorinated hydrocarbon group, the polysiloxane group, and the hydrocarbon group having 12 or more carbon atoms have low cohesive energy, and thus the resin T containing these groups is likely to be unevenly distributed at the gas-liquid interface of the ink. As a result, in a case where the ink is cured to form the ink film, the resin T can exist on the surface of the ink film more than a colorant (for example, a pigment) which can be contained in the ink, and the adhesiveness between the ink film (that is, the image) and the base material for lamination can be improved.

From the viewpoint of unevenly dispersing the resin T on the surface of the ink film and improving blocking resistance, the content of the constitutional unit A is preferably 1% by mass or more, more preferably 3% by mass or more, and still more preferably 5% by mass or more.

On the other hand, from the viewpoint of improving the affinity with the base material for lamination and improving the blocking resistance, the content of the constitutional unit A is preferably 37% by mass or less, more preferably 32% by mass or less, and still more preferably 25% by mass or less.

The fluorinated hydrocarbon group means a hydrocarbon group substituted with at least one fluorine atom.

Examples of the fluorinated hydrocarbon group include a fluorinated alkyl group, a fluorinated alkenyl group, and a fluorinated aryl group.

As the fluorinated hydrocarbon group, a fluorinated alkyl group is preferable, and a perfluoroalkyl group is particularly preferable.

The number of fluorine atoms in the fluorinated hydrocarbon group is preferably 6 or more and more preferably 8 or more. The upper limit of the number of fluorine atoms in the fluorinated hydrocarbon group is not particularly limited, and examples thereof include 40.

The number of carbon atoms in the fluorinated hydrocarbon group is preferably 3 or more and more preferably 4 or more. The upper limit of the number of carbon atoms in the fluorinated hydrocarbon group is not particularly limited, and examples thereof include 20.

Examples of the hydrocarbon group having 12 or more carbon atoms include an alkyl group, an alkenyl group, an aryl group, an alkylaryl group, and an aralkyl group. As the hydrocarbon group having 12 or more carbon atoms, an alkyl group is particularly preferable.

The number of carbon atoms in the hydrocarbon group having 12 or more carbon atoms is preferably 14 or more and more preferably 16 or more.

The upper limit of the number of carbon atoms in the hydrocarbon group having 12 or more carbon atoms is not particularly limited, and examples thereof include 30.

The polysiloxane group means a divalent group including a repetition of an Si-O bond.

The constitutional unit A more preferably includes a monovalent group including a polysiloxane group.

Examples of the monovalent group including a polysiloxane group include the following group (P).

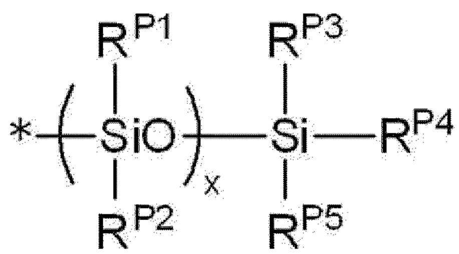

(P)

In the group (P), $R^{P1}$ and $R^{P2}$ each independently represent a hydrocarbon group having 1 to 6 carbon atoms or the following group (Z), $R^{P3}$ to $R^{P5}$ each independently represent a hydrocarbon group having 1 to 6 carbon atoms, x represents an integer of 1 to 100, and * represents a bonding position.

In a case where x is an integer of 2 or more, a plurality of $R^{P1}$'s may be the same or different from each other, and a plurality of $R^{P2}$'s may be the same or different from each other.

In the group (P), the number of Si-O bonds (that is, siloxane bonds) is 2 or more.

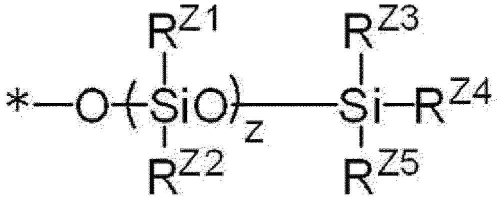

(Z)

In the group (Z), $R^{Z1}$ to $R^{Z5}$ each independently represent a hydrocarbon group having 1 to 6 carbon atoms, z represents an integer of 0 to 100, and * represents a bonding position.

In a case where z is an integer of 2 or more, a plurality of $R^{Z1}$'s may be the same or different from each other, and a plurality of $R^{Z2}$'s may be the same or different from each other.

x in the group (P) is preferably an integer of 1 to 50, more preferably an integer of 1 to 20, and particularly preferably an integer of 1 to 10.

In the group (P), as the hydrocarbon groups having 1 to 6 carbon atoms in $R^{P1}$ to $R^{P5}$ a methyl group, an ethyl group, an n-butyl group, or a phenyl group is preferable, a methyl group, an n-butyl group, or a phenyl group is more preferable, and a methyl group an n-butyl group is particularly preferable.

z in the group (Z) is preferably an integer of 0 to 50, more preferably an integer of 0 to 20, and particularly preferably an integer of 0 to 10.

In the group (Z), as the hydrocarbon groups having 1 to 6 carbon atoms in $R^{Z1}$ to $R^{Z5}$, a methyl group, an ethyl group, or a phenyl group is preferable, a methyl group or a phenyl group is more preferable, and a methyl group is particularly preferable.

Examples of the constitutional unit A include a constitutional unit derived from a vinyl monomer (for example, (meth)acrylic acid ester, (meth)acrylamide, and the like).

The constitutional unit A is preferably a constitutional unit derived from (meth)acrylic acid ester, and more preferably a constitutional unit represented by Formula (A1).

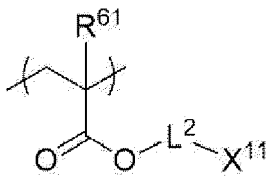

(A1)

In the constitutional unit (A1), $R^{61}$ represents a hydrogen atom or a methyl group, $L^2$ represents a single bond or a linking group, and $X^{11}$ represents a fluorinated hydrocarbon group, a monovalent group including a polysiloxane group, or a hydrocarbon group having 12 or more carbon atoms.

The preferred aspects of the fluorinated hydrocarbon group, the monovalent group including a polysiloxane group, and the hydrocarbon group having 12 or more carbon atoms in $X^{11}$ are as described above, respectively.

$R^{61}$ represents a hydrogen atom or a methyl group, and a methyl group is preferable.

As the linking group represented by $L^2$, a divalent hydrocarbon group having 1 to 11 carbon atoms (more preferably having 2 to 11 carbon atoms and still more preferably having 2 to 8 carbon atoms) is preferable.

The above-described divalent hydrocarbon group may have a substituent such as a hydroxy group and an alkoxy group.

Examples of the above-described divalent hydrocarbon group include an alkylene group, an alkenylene group, an arylene group, an alkylenearylene group, an alkylenearylenealkylene group, an alkylene carbonyloxyalkylene group, and an arylene carbonyloxyalkylene group.

As the above-described divalent hydrocarbon group, an alkylene group having 1 to 11 carbon atoms (more preferably having 1 to 6 carbon atoms) is particularly preferable.

Specific examples of the constitutional unit represented by Formula (A1) are as follows.

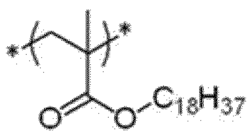

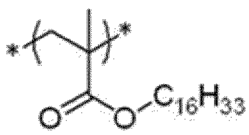

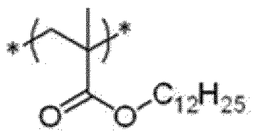

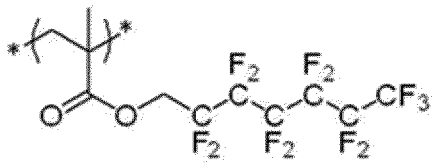
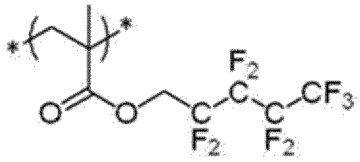
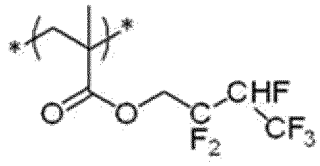

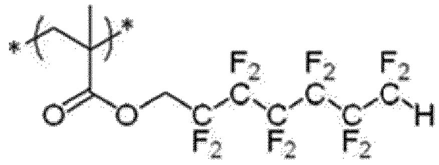
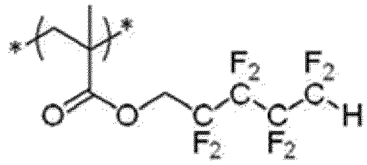

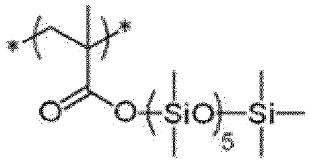
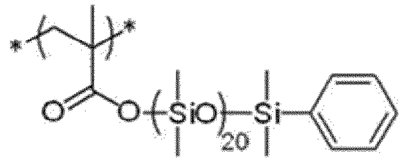

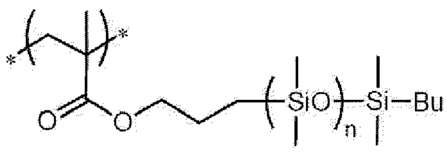

n=1~140

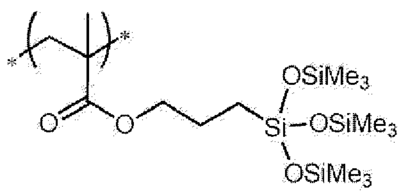

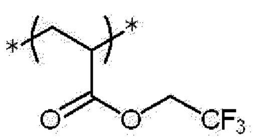
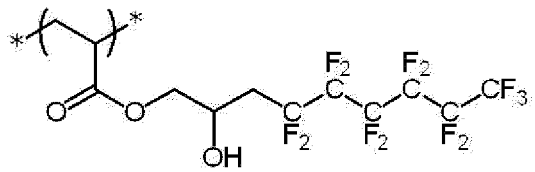
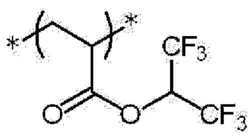

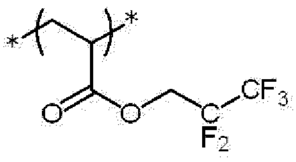
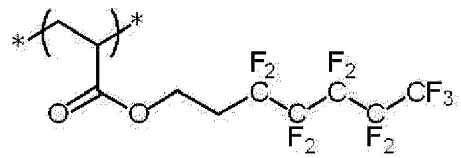

The constitutional unit A is a constitutional unit derived from the polymerizable compound A, and can be introduced into the resin T by using the polymerizable compound A as a raw material.

The polymerizable compound A may be a commercially available product.

Examples of the commercially available product include X-22-174ASX, X-22-174BX, KF-2012, X-22-2426, and X-22-2404 (manufactured by Shin-Etsu Chemical Co., Ltd.); FM00711, FM-0721, FM-0725, and TM-0701T (manufactured by JNC Corporation); and VISCOAT 3F and VISCOAT 13F (manufactured by Osaka Organic Chemical Industry Ltd.).

Among these, from the viewpoint of further improving the adhesiveness to the base material for lamination, the polymerizable compound A is preferably a polymerizable compound including at least one selected from the group consisting of a fluorinated hydrocarbon group and a polysiloxane group.

In a case where a number-average molecular weight (Mn) of the polymerizable compound A is increased, the effect of unevenly dispersing the resin T on the surface is enhanced, and peelability is enhanced. From the viewpoint of further improving the adhesiveness to the base material for lamination, the number-average molecular weight of the polymerizable compound A is preferably 5,000 or less and more preferably 3,000 or less. On the other hand, from the viewpoint of blocking resistance, the number-average molecular weight of the polymerizable compound A is preferably 400 or more and more preferably 700 or more.

In the present disclosure, the number-average molecular weight is measured by gel permeation chromatography (GPC). For example, HLC-8220GPC (manufactured by Tosoh Corporation) is used as GPC, three columns of TSKgel, SuperMultipore HZ-H (manufactured by Tosoh Corporation; 4.6 mmID x 15 cm) are used as a column, and tetrahydrofuran (THF) is used as an eluent. As the conditions, a sample concentration of 0.45% by mass, a flow rate of 0.35 ml/min, a sample injection amount of 10 μl, and a measurement temperature of 40°C are set, and a differential refractive index (RI) detector is used for detection. A calibration curve is obtained from, as a standard sample, eight samples of product names "TSK Standard polystyrene" manufactured by Tosoh Corporation: "F-40", "F-20", "F-4", "F-1", "A-5000", "A-2500", "A-1000", and "n-propylbenzene".

In a case where a molecular weight of the polymerizable compound A is 1,000 or less, the molecular weight is calculated from the type and the number of atoms constituting the polymerizable compound A.

Constitutional unit B

The resin T contains a constitutional unit B derived from a polymerizable compound B having a polarity element of an HSP value of 4.8 $MPa^{1/2}$ or more. The resin T may contain only one kind of the constitutional unit B, or two or more kinds of constitutional units B.

A content of the constitutional unit B is 15% by mass or more with respect to the total amount of the resin T.

Since the resin T contains the constitutional unit A in addition to the constitutional unit B, the content of the constitutional unit B is less than 100% by mass with respect to the total amount of the resin T.

Since the vinyl chloride has a large polarity element of HSP value, in a case where the resin T contains 15% by mass or more of the constitutional unit B derived from a polymerizable compound B having a polarity element of an HSP value of 4.8 $MPa^{1/2}$ or more, the adhesiveness between the image and the base material for lamination is improved.

From the above viewpoint, the content of the constitutional unit B is preferably 25% by mass or more, more preferably 40% by mass or more, still more preferably 55% by mass or more, and particularly preferably 70% by mass or more.

The SP value (Hildebrand solubility parameter: $\delta$) is a physical property value defined by a square root of a cohesive energy density, and is a numerical value indicating a dissolving behavior of a substance. The SP value is a parameter which takes polarity of a substance into consideration by dividing the SP value into three components of a dispersion element ($\delta D$), a polarity element ($\delta P$), and a hydrogen bonding element ($\delta H$), which is a Hansen solubility parameter (HSP value).

$\delta^2$ is represented by $\delta D^2 + \delta P^2 + \delta H^2$.

In the present disclosure, the dispersion element, the polarity element, and the hydrogen bonding element of the HSP value are calculated based on the structure of the compound using Hansen solubility parameter software (product name "HSPiP 5th Edition").

From the viewpoint of further increasing the affinity with the base material for lamination and improving the adhesiveness to the base material for lamination, in the polymerizable compound B, the polarity element of the HSP value is preferably 5.0 $MPa^{1/2}$ or more, more preferably 5.3 $MPa^{1/2}$ or more, and still more preferably 5.6 $MPa^{1/2}$ or more.

The upper limit value of the polarity element of the HSP value is not particularly limited, but is, for example, 21.5 $MPa^{1/2}$.

In addition, from the viewpoint of further enhancing the affinity with the base material for lamination and improving the adhesiveness to the base material for lamination, in the polymerizable compound B, the hydrogen bond element of the HSP value is preferably 11.0 $MPa^{1/2}$ or less, more preferably 10.0 $MPa^{1/2}$ or less, still more preferably 8.6 $MPa^{1/2}$ or less, particularly preferably 8.0 $MPa^{1/2}$ or less, and most preferably 7.5 $MPa^{1/2}$ or less.

The lower limit value of the hydrogen bond element of the HSP value is not particularly limited, but is, for example, 3.0 $MPa^{1/2}$.

As described above, the resin T may contain two or more kinds of the constitutional units B, and in a case where the resin T contains two or more kinds of the constitutional units B, the resin T is synthesized using two or more kinds of polymerizable compounds.

In a case where two or more kinds of polymerizable compound are used, it is preferable that at least one polymerizable compound B among the two or more kinds of polymerizable compounds satisfies the above-described preferred ranges of the polarity element and the hydrogen bond element of the HSP value.

Specifically, the "in the polymerizable compound B, the hydrogen bond element of the HSP value is 11.0 $MPa^{1/2}$

or less" means that a hydrogen bond element of the HSP value in at least one polymerizable compound B in the two or more kinds of polymerizable compounds is 11.0 $MPa^{1/2}$ or less.

From the viewpoint of further improving the blocking resistance, the resin T preferably contains two or more kinds of the constitutional units B.

Specifically, it is preferable that the polymerizable compound B contains a polymerizable compound B1 having a hydrogen bond element of the HSP value of 11.0 $MPa^{1/2}$ or less and a polymerizable compound B2 having a hydrogen bond element of the HSP value of more than 11.0 $MPa^{1/2}$.

In a case where the resin T contains the constitutional unit B1 derived from the polymerizable compound B1 and the constitutional unit B2 derived from the polymerizable compound B2, long-term blocking resistance is improved while maintaining the adhesiveness to the base material for lamination.

From the viewpoint of further improving the adhesiveness to the base material for lamination and the blocking resistance, a mass ratio of a content of the polymerizable compound B1 to a content of the polymerizable compound B2 is preferably 1 to 20 and more preferably 2 to 17.

It is preferable that the constitutional unit B is at least one constitutional unit selected from the group consisting of Formulae (1) to (5).

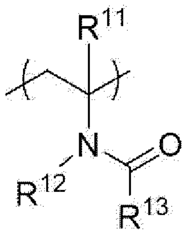
(1)

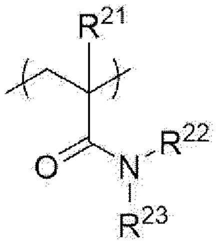
(2)

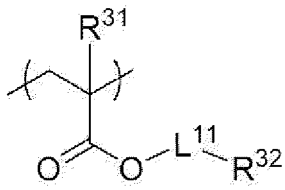
(3)

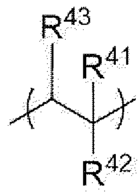
(4)

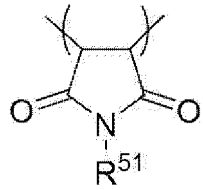
(5)

In Formula (1), $R^{11}$ represents a hydrogen atom or a hydrocarbon group, $R^{12}$ and $R^{13}$ each independently represent a hydrocarbon group which may include an oxygen atom, or a hydrogen atom, and $R^{12}$ and $R^{13}$ may be bonded to each other to form a ring,

in Formula (2), $R^{21}$ represents a hydrogen atom or a hydrocarbon group, $R^{22}$ and $R^{23}$ each independently represent a hydrocarbon group which may include an oxygen atom, or a hydrogen atom, and $R^{22}$ and $R^{23}$ may be bonded to each other to form a ring,
in Formula (3), $R^{31}$ represents a hydrogen atom or a hydrocarbon group, $L^{11}$ represents a single bond or a divalent linking group, and $R^{32}$ represents a hydrocarbon group including at least one selected from the group consisting of -O-, -S-, -C(=O)-, -NH-, and -N<,
in Formula (4), $R^{41}$ represents a hydrogen atom or a hydrocarbon group, $R^{42}$ and $R^{43}$ each independently represent a hydrogen atom, a cyano group, a hydrocarbon group having a carbonyl group, a phosphoric acid ester group, or a monovalent heterocyclic group, and $R^{42}$ and $R^{43}$ may be bonded to each other to form a ring,
in Formula (5), $R^{51}$ represents a hydrogen atom or a hydrocarbon group.

Formula (1)

In Formula (1), $R^{11}$ is preferably a hydrogen atom or a methyl group.

In Formula (1), the hydrocarbon group represented by $R^{12}$ and $R^{13}$ may be a linear hydrocarbon group, a branched hydrocarbon group, or a cyclic hydrocarbon group, but is preferably a linear hydrocarbon group.

The hydrocarbon group represented by $R^{12}$ and $R^{13}$ may be a saturated hydrocarbon group or an unsaturated hydrocarbon group, but is preferably a saturated hydrocarbon group.

That is, the hydrocarbon group represented by $R^{12}$ and $R^{13}$ is more preferably a linear alkyl group.

The number of carbon atoms in the hydrocarbon group represented by $R^{12}$ and $R^{13}$ is preferably 1 to 10.

Examples of the hydrocarbon group which may include an oxygen atom include a -O-monovalent hydrocarbon group, a -divalent hydrocarbon group-OH, a -divalent hydrocarbon group-O-monovalent hydrocarbon group, and a -divalent hydrocarbon group-C=(O)O-monovalent hydrocarbon group.

From the viewpoint of reducing hydrogen bonding properties of the resin T, increasing the affinity with the polymer including vinyl chloride as a constitutional unit, and reducing a viscosity of the ink, $R^{12}$ and $R^{13}$ are each independently preferably the hydrocarbon group which may include an oxygen atom.

In addition, it is preferable that $R^{12}$ and $R^{13}$ are bonded to each other to form a ring. The ring formed by the

bonding of $R^{12}$ and $R^{13}$ to each other is preferably a 5-membered ring to an 8-membered ring.

Examples of the constitutional unit represented by Formula (1) include the following constitutional units.

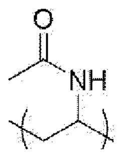
(1-1)

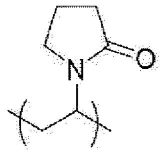
(1-2)

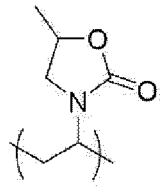
(1-3)

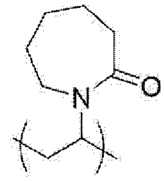
(1-4)

Formula (2)

In Formula (2), $R^{21}$ is preferably a hydrogen atom or a methyl group.

In Formula (2), the hydrocarbon group represented by $R^{22}$ and $R^{23}$ may be a linear hydrocarbon group, a branched hydrocarbon group, or a cyclic hydrocarbon group, but is preferably a linear hydrocarbon group.

The hydrocarbon group represented by $R^{22}$ and $R^{23}$ may be a saturated hydrocarbon group or an unsaturated hydrocarbon group, but is preferably a saturated hydrocarbon group.

That is, the hydrocarbon group represented by $R^{22}$ and $R^{23}$ is more preferably a linear alkyl group.

The number of carbon atoms in the hydrocarbon group represented by $R^{22}$ and $R^{23}$ is preferably 1 to 10 and more preferably 2 to 8.

Examples of the hydrocarbon group which may include an oxygen atom include a - divalent hydrocarbon group-OH, a -divalent hydrocarbon group-O-monovalent hydrocarbon group, a -divalent hydrocarbon group-C=(O)-monovalent hydrocarbon group, and a -divalent hydrocarbon group-C=(O)O-monovalent hydrocarbon group.

In Formula (2), from the viewpoint of reducing hydrogen bonding properties of the resin T, increasing the affinity with the polymer including vinyl chloride as a constitutional unit, and reducing the viscosity of the ink, $R^{22}$ and $R^{23}$ are each independently preferably the hydrocarbon group which may include an oxygen atom.

In addition, it is preferable that $R^{22}$ and $R^{23}$ are bonded to each other to form a ring. The ring formed by the bonding of $R^{22}$ and $R^{23}$ to each other is preferably a 5-membered ring to an 8-membered ring.

Examples of the constitutional unit represented by Formula (2) include the following constitutional units.

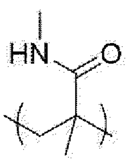
(2-1)

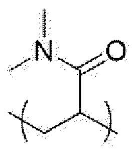
(2-2)

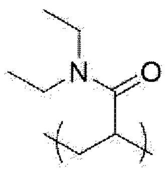
(2-3)

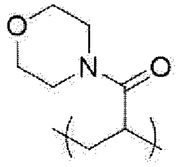
(2-4)

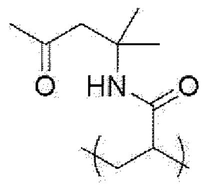
(2-5)

Formula (3)

In Formula (3), $R^{31}$ is preferably a hydrogen atom or a methyl group.

In Formula (3), the divalent linking group represented by $L^{11}$ is preferably an alkylene group having 1 to 3 carbon atoms or a group represented by any one of Formulae (L11) to (L14); more preferably an alkylene group having 1 to 3 carbon atoms or a group represented by any one of Formulae (L11) to (L13); and still more preferably an alkylene group having 1 to 3 carbon atoms or a group represented by Formula (L11).

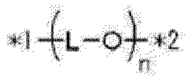
(L11)

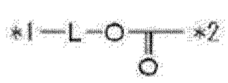
(L12)

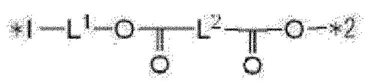
(L13)

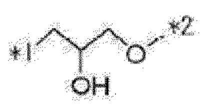
(L14)

In Formula (L11), L represents an alkylene group having 1 to 3 carbon atoms, n represents an integer of 1 to 4, *1 represents a bonding position with the oxygen atom, and *2 represents a bonding position with $R^{32}$.

In Formula (L12), L represents an alkylene group having 1 to 3 carbon atoms, *1 represents a bonding position with the oxygen atom, and *2 represents a bonding position with $R^{32}$.

In Formula (L13), $L^1$ and $L^2$ each independently represent an alkylene group having 1 to 3 carbon atoms, *1 represents a bonding position with the oxygen atom, and *2 represents a bonding position with $R^{32}$.

In Formula (L14), *1 represents a bonding position with the oxygen atom, and *2 represents a bonding position with $R^{32}$.

In Formula (L11), n is preferably an integer of 1 to 3, more preferably 1 or 2, and particularly preferably 1.

In Formula (3), the hydrocarbon group represented by $R^{32}$ may be a linear hydrocarbon group, a branched hydrocarbon group, or a cyclic hydrocarbon group, but is preferably a hydrocarbon group including a ring structure.

The hydrocarbon group represented by $R^{32}$ may be a saturated hydrocarbon group or an unsaturated hydrocarbon group, but is preferably a saturated hydrocarbon group.

The number of carbon atoms in the hydrocarbon group represented by $R^{32}$ is preferably 3 to 20, more preferably 3 to 15, still more preferably 3 to 12, and particularly preferably 3 to 10.

In the hydrocarbon group including at least one selected from the group consisting of - O-, -S-, -C(=O)-, -NH-, and -N<, examples of a combination of two or more of -O-, -S-, - C(=O)-, -NH-, and -N< include -C(=O)O-, -O-C(=O)O-, -C(=O)-NH-, and a pyrrolidone ring.

$R^{32}$ is preferably a hydrocarbon group including -C(=O)-NH-, a hydrocarbon group including -C(=O)O-, a hydrocarbon group including -O-C-O-, or a hydrocarbon group including a hydroxyl group.

Examples of the constitutional unit represented by Formula (3) include the following constitutional units.

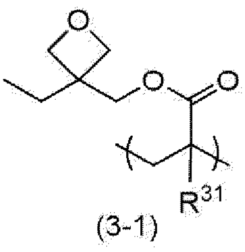
(3-1)

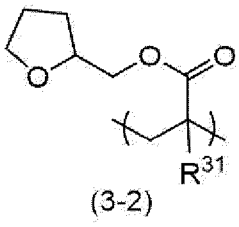
(3-2)

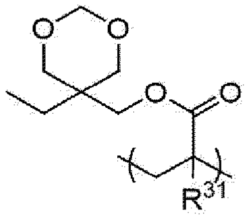
(3-3)

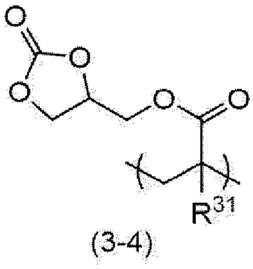
(3-4)

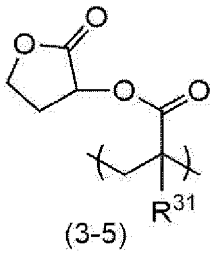
(3-5)

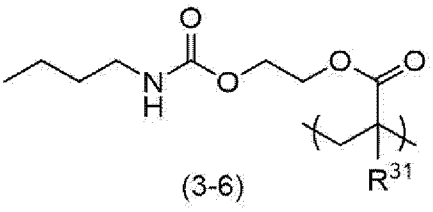
(3-6)

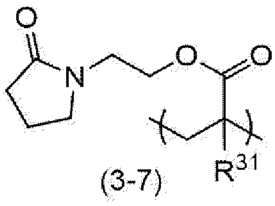
(3-7)

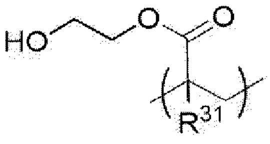
(3-8)

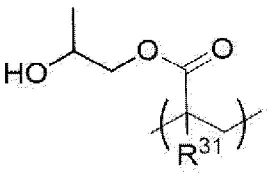
(3-9)

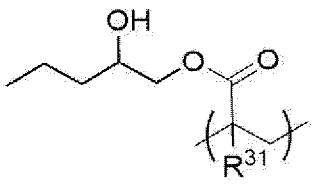
(3-10)

Formula (4)

In Formula (4), $R^{41}$ is preferably a hydrogen atom or a methyl group.

In Formula (4), the monovalent heterocyclic group represented by $R^{42}$ and $R^{43}$ refers to a group obtained by removing one hydrogen atom from a heterocyclic compound.

A heterocycle in the monovalent heterocyclic group is preferably a 5-membered ring or a 6-membered ring. In addition, the above-described heterocycle may form a fused ring with an aliphatic ring, an aromatic ring, or another heterocycle.

Examples of a heteroatom in the above-described heterocycle include an N atom, an O atom, and an S atom, and an N atom is preferable.

Examples of the above-described heterocycle include a pyridine ring, a piperidine ring, a furan ring, a furfuran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

In Formula (4), from the viewpoint of increasing the affinity with the polymer including vinyl chloride as a constitutional unit, $R^{42}$ and $R^{43}$ are each independently preferably a cyano group or a monovalent heterocyclic group.

Examples of the constitutional unit represented by Formula (4) include the following constitutional units.

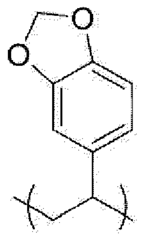
(4-1)

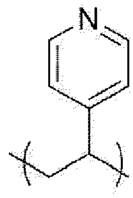
(4-2)

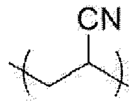
(4-3)

Formula (5)

In Formula (5), the hydrocarbon group represented by $R^{51}$ may be a linear hydrocarbon group, a branched hydrocarbon group, or a cyclic hydrocarbon group.

The hydrocarbon group represented by $R^{51}$ may be a saturated hydrocarbon group or an unsaturated hydrocarbon group, but is preferably a saturated hydrocarbon group.

The number of carbon atoms in the hydrocarbon group represented by $R^{51}$ is preferably 1 to 10.

Examples of the constitutional unit represented by Formula (5) include the following constitutional units.

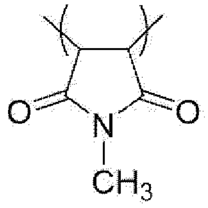
(5-1)

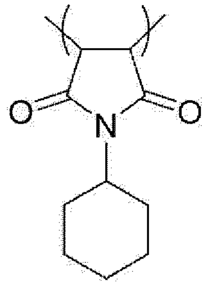
(5-2)

The constitutional unit B is a constitutional unit derived from the polymerizable compound B, and can be introduced into the resin T by using the polymerizable compound B as a raw material.

A polarity element (δP) and a hydrogen bonding element (δH) of the HSP value for each polymerizable compound are shown below. The unit is $MPa^{1/2}$.

In the following polymerizable compounds, a polymerizable compound in which the polarity element of the HSP value is less than 4.8 $MPa^{1/2}$ does not correspond to the polymerizable compound B.

In the following polymerizable compounds, a polymerizable compound in which the polarity element of the HSP value is 4.8 $MPa^{1/2}$ or more corresponds to the polymerizable compound B. In a case of a polymerizable compound derived from the constitutional unit represented by Formulae (1) to (5), the corresponding formula is shown.

| Structural formula | δP | δH |
|---|---|---|
| 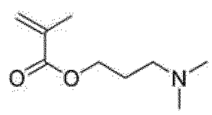 | 3.8 | 4.9 |

(continued)

| Structural formula | δP | δH |
|---|---|---|
| 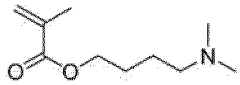 | 3.3 | 4.4 |
| 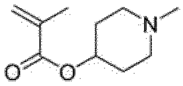 | 3.8 | 5.6 |
| 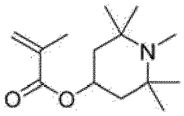 | 1.8 | 2.9 |
| 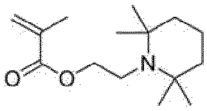 | 2.1 | 3 |
| 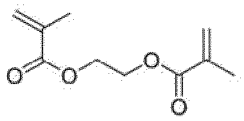 | 4.2 | 5.6 |
| 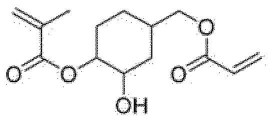 | 4.7 | 7.7 |
| 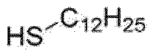 | 2.8 | 3 |
| 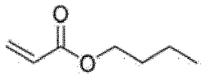 | 4.2 | 5.5 |
| 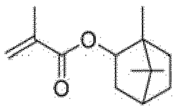 | 2.3 | 2.4 |

| Structural formula | δP | δH | Corresponding formula |
|---|---|---|---|
| 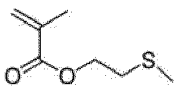 | 5.1 | 5.9 | Formula (3) |
| 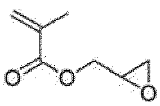 | 6.6 | 6.9 | Formula (3) |
| 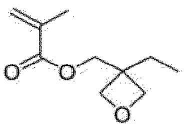 | 4.8 | 4.9 | Formula (3) |
| 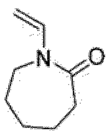 | 5.6 | 5.3 | Formula (1) |

(continued)

| Structural formula | δP | δH | Corresponding formula |
|---|---|---|---|
| 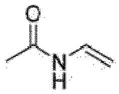 | 13.7 | 10.3 | Formula (1) |
| 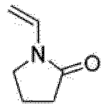 | 8.4 | 6.3 | Formula (1) |
| 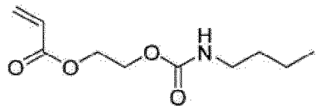 | 7.7 | 7.7 | Formula (3) |
| 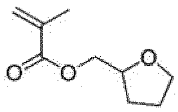 | 5.1 | 5.5 | Formula (3) |
| 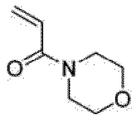 | 11.2 | 5.8 | Formula (2) |
| 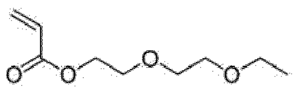 | 5.1 | 6.5 | Formula (3) |
| 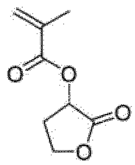 | 8.3 | 6.8 | Formula (3) |
| 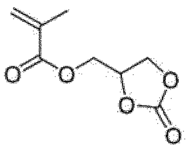 | 14.4 | 6.7 | Formula (3) |

| Structural formula | δP | δH | Corresponding formula |
|---|---|---|---|
| 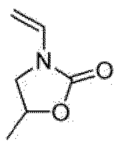 | 8.7 | 6.6 | Formula (1) |
| 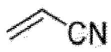 | 13.9 | 7.3 | Formula (4) |
| 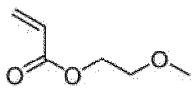 | 5.6 | 7.2 | Formula (3) |
| 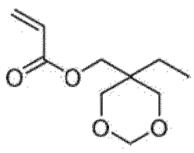 | 5.9 | 5.7 | Formula (3) |

(continued)

| Structural formula | δP | δH | Corresponding formula |
| --- | --- | --- | --- |
| 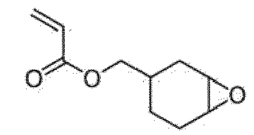 | 5.5 | 5.6 | Formula (3) |
| 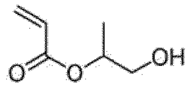 | 6.9 | 11.9 | Formula (3) |
| 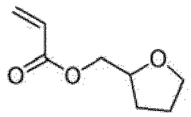 | 5.6 | 5.9 | Formula (3) |
| 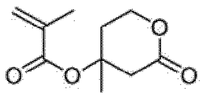 | 6.7 | 5.6 | Formula (3) |
| 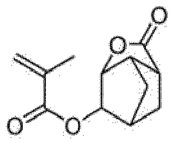 | 5.8 | 4.4 | Formula (3) |
| 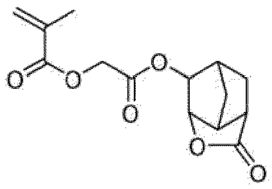 | 4.8 | 5.5 | Formula (3) |

| Structural formula | δP | δH | Corresponding formula |
| --- | --- | --- | --- |
| 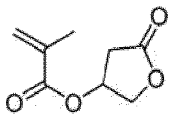 | 8.5 | 6.7 | Formula (3) |
| 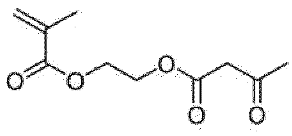 | 7 | 6.8 | Formula (3) |
| 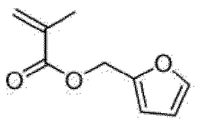 | 5.1 | 6.2 | Formula (3) |
| 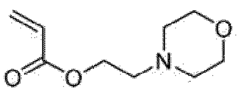 | 5.6 | 7.3 | Formula (3) |
| 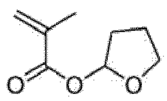 | 5.4 | 5.8 | Formula (3) |

(continued)

| Structural formula | δP | δH | Corresponding formula |
|---|---|---|---|
| 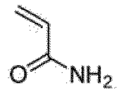 | 14.7 | 13.7 | Formula (2) |
| 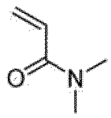 | 10.4 | 7.6 | Formula (2) |
| 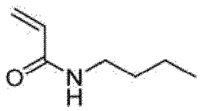 | 10.2 | 8 | Formula (2) |
| 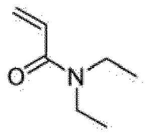 | 8.8 | 3.5 | Formula (2) |
| 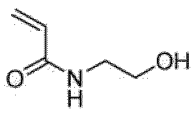 | 15.2 | 15.7 | Formula (2) |

| Structural formula | δP | δH | Corresponding formula |
|---|---|---|---|
| 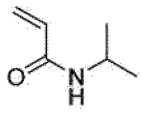 | 10.2 | 6.5 | Formula (2) |
| 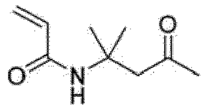 | 9 | 5.4 | Formula (2) |
| 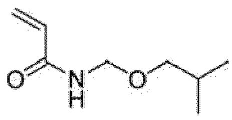 | 8.7 | 5.5 | Formula (2) |
| 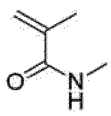 | 10.6 | 6.8 | Formula (2) |
| 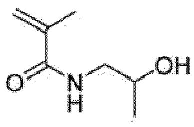 | 10.4 | 10.5 | Formula (2) |
| 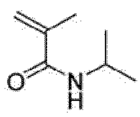 | 10.9 | 7.2 | Formula (2) |
| 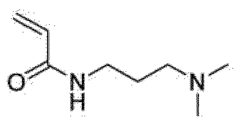 | 9.7 | 7.2 | Formula (2) |

(continued)

| Structural formula | δP | δH | Corresponding formula |
|---|---|---|---|
| 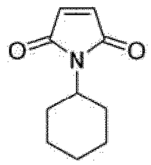 | 6.4 | 4.4 | Formula (5) |
| 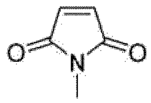 | 11.9 | 7 | Formula (5) |
| 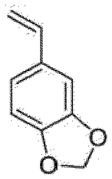 | 5.4 | 6.4 | Formula (4) |

| Structural formula | δP | δH | Corresponding formula |
|---|---|---|---|
| 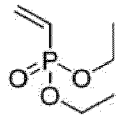 | 12.6 | 7.3 | Formula (4) |
| 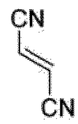 | 21.1 | 9.1 | Formula (4) |
| 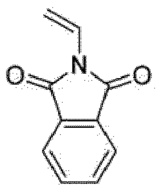 | 7.5 | 4.6 | Formula (4) |
| 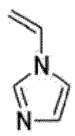 | 8 | 5.9 | Formula (4) |
| 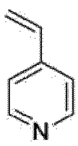 | 5.8 | 5.2 | Formula (4) |
| 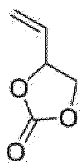 | 16.9 | 6.3 | Formula (4) |
| 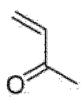 | 7.9 | 5.8 | Formula (4) |

(continued)

| Structural formula | δP | δH | Corresponding formula |
|---|---|---|---|
| 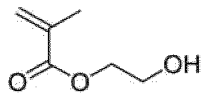 | 7.3 | 11.5 | Formula (3) |
| 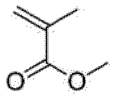 | 5.3 | 6.6 | - |

The resin T preferably contains two or more kinds of the constitutional units B.
In a case where the resin T contains two or more kinds of the constitutional units B, the constitutional unit B preferably includes the constitutional unit represented by Formula (1) and the constitutional unit represented by Formula (2), or includes the constitutional unit represented by Formula (1) and the constitutional unit represented by Formula (3).
From the viewpoint of unevenly dispersing the resin T on the surface of the ink film and improving blocking resistance, a mass ratio of the constitutional unit A to the constitutional unit B is preferably 0.01 or more, more preferably 0.03 or more, and still more preferably 0.05 or more.
From the viewpoint of further improving the affinity with the base material for lamination and improving the blocking resistance, the mass ratio of the constitutional unit A to the constitutional unit B is preferably 0.65 or less, more preferably 0.55 or less, still more preferably 0.45 or less, and particularly preferably 0.35 or less.
From the above viewpoint, the mass ratio of the constitutional unit A to the constitutional unit B is preferably 0.01 to 0.65, more preferably 0.03 to 0.55, still more preferably 0.05 to 0.45, and particularly preferably 0.05 to 0.35.
From the viewpoint of further improving the blocking resistance of the image, it is particularly preferable that the resin T has a structural unit derived from hydroxyethyl methacrylate. Here, the hydroxyethyl methacrylate corresponds to the constitutional unit represented by Formula (3) among the constitutional units B described above.
A mass ratio of the constitutional unit A to the constitutional unit B is as described above.
A content of the structural unit derived from hydroxyethyl (meth)acrylate with respect to the total amount of the resin T is preferably 2% by mass to 40% by mass, more preferably 3% by mass to 30% by mass, and still more preferably 5% by mass to 20% by mass.
The resin T may contain other constitutional units in addition to the constitutional unit A and the constitutional unit B.
From the viewpoint of improving the adhesiveness to the base material for lamination, the total content of the constitutional unit A and the constitutional unit B is preferably 30% by mass or more, more preferably 45% by mass or more, and still more preferably 60% by mass or more with respect to the total amount of the resin T. The total content of the constitutional unit A and the constitutional unit B may be 100% by mass. That is, the resin T may consist of only the constitutional unit A and the constitutional unit B.
In a case where the resin T contains other constitutional units, the other constitutional units are not particularly limited, and examples thereof include a constitutional unit derived from a monofunctional polymerizable monomer described later.

Physical properties

A glass transition temperature of the resin T is preferably 150°C or lower, more preferably 130°C or lower, and still more preferably 100°C or lower. The lower limit value of the glass transition temperature is not particularly limited, but from the viewpoint of blocking resistance, it is preferably -20°C.
In the present disclosure, the glass transition temperature is measured using a differential scanning calorimeter, for example, using a product name "DSC-60" manufactured by Shimadzu Corporation.
In a case where the glass transition temperature of the resin T is 150°C or lower, when the base material for lamination is thermocompression-bonded to the image, mobility of the resin T is improved, and the adhesiveness to the base material for lamination is improved.
A solubility parameter (SP value) of the resin T is preferably 7.5 $MPa^{1/2}$ to 14.0 $MPa^{1/2}$, more preferably 8.5 $MPa^{1/2}$ to 13.0 $MPa^{1/2}$, and still more preferably 9.5 $MPa^{1/2}$ to 12.0 $MPa^{1/2}$.
In the present disclosure, the SP value means a Hansen solubility parameter.
The SP value of the resin T is calculated by the following method.
100 mg of a sample is completely dissolved in 2 mL of THF, and deionized water or n-hexane is added dropwise to the solution, and an SP value of the sample is calculated from a volume fraction immediately before a timing of turbidity

using the following expression.

SP value of THF = $\delta_T$
SP value of water = $\delta_W$
SP value of n-hexane = $\delta_H$
Volume fraction (water): deionized water/(deionized water + THF) = $V_W$
Volume fraction (hexane): hexane/(hexane + THF) = $V_H$
SP value of mixed solution of deionized water/THF = $\delta_{WT} = \delta_T \times (1 - V_W) + \delta_W \times V_W$
SP value of mixed solution of n-hexane/THF = $\delta_{HT} = \delta_T \times (1 - V_H) + \delta_H \times V_H$
SP value of sample = $\delta_P = (\delta_{WT} \times (V_W)^{0.5} + \delta_{HT} \times (VH)^{0.5})/((VW)^{0.5} + (VH)^{0.5})$

In a case where the SP value of the resin T is within the above-described range, the adhesiveness to the base material for lamination is improved.

From the viewpoint of improving the adhesiveness to the base material for lamination, a weight-average molecular weight of the resin T is preferably 1,000 or more, more preferably 3,000 or more, and still more preferably 5,000 or more. On the other hand, from the viewpoint of jettability and storage stability of the ink, the weight-average molecular weight of the resin T is preferably 80,000 or less, more preferably 60,000 or less, and still more preferably 40,000 or less.

In the present disclosure, the weight-average molecular weight is measured by the same method as the measuring method of the number-average molecular weight described above.

From the viewpoint of improving the adhesiveness to the base material for lamination, a content of the resin T is preferably 0.1% by mass or more, more preferably 0.3% by mass or more, and still more preferably 0.5% by mass or more with respect to the total amount of the ink. On the other hand, from the viewpoint of jettability and storage stability of the ink, the content of the resin T is preferably 10.0% by mass or less, more preferably 8.0% by mass or less, still more preferably 6.0% by mass or less, and even more preferably 3.0% by mass or less with respect to the total amount of the ink.

A weight-average molecular weight (Mw) of the resin is preferably 1,000 to 70,000 and more preferably 5,000 to 50,000.

In a case where the ink according to the present disclosure contains the resin, a content of the resin is preferably 0.1% by mass to 10.0% by mass, more preferably 0.3% by mass to 8.0% by mass, still more preferably 0.5% by mass to 6.0% by mass, and even more preferably 0.5% by mass to 3.0% by mass with respect to the total amount of the ink.

Water

The ink according to the present disclosure may contain a small amount of water.

Specifically, a content of water with respect to the total amount of the ink is preferably 3% by mass or less, more preferably 2% by mass or less, and still more preferably 1% by mass or less.

The ink is preferably a non-aqueous ink which substantially does not contain water.

Colorant

The ink according to the present disclosure preferably contains at least one colorant.

The colorant is not particularly limited, and can be optionally selected from known coloring materials such as a pigment, a water-soluble dye, and a dispersed dye. Among these, from the viewpoint of excellent weather fastness and rich color reproducibility, the colorant is preferably a pigment.

The type of the pigment is not particularly limited, and any of an organic pigment or an inorganic pigment may be used.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In a case where the ink according to the present disclosure contains a pigment as the colorant, the ink may contain a dispersant as necessary.

For the colorant such as a pigment and the pigment dispersing agent, known documents such as paragraphs 0152 to 0158 of JP2011-225848A and paragraphs 0132 to 0149 of JP2009-209352A can be appropriately referred to.

In a case where the ink according to the present disclosure contains the colorant, a content of the colorant is preferably 0.1% by mass to 20% by mass and more preferably 0.5% by mass to 10% by mass with respect to the total amount of the ink.

### Other Components

The ink according to the present disclosure may contain a component other than those described above.
Examples of the other components include an ultraviolet absorber, a co-sensitizer, an antioxidant, a fading inhibitor, and a conductive salt.
With regard to the other components, reference can be appropriately made to known documents, for example, JP2011-225848A, JP2009-209352A, and the like.

### Physical Properties of Ink

From the viewpoint of jettability, a viscosity of the ink according to the present disclosure is preferably 4 mPa·s to 50 mPa·s, more preferably 10 mPa·s to 30 mPa·s, and still more preferably 10 mPa·s to 25 mPa·s.
The viscosity means a value measured at 25°C.
The viscosity is a value measured using a viscometer, and can be measured using, for example, VISCOMETER RE-85L (manufactured by TOKI SANGYO CO., LTD.).
From the viewpoint of jettability, a surface tension of the ink according to the present disclosure is preferably 60 mN/m or less, more preferably 20 mN/m to 50 mN/m, and still more preferably 25 mN/m to 45 mN/m.
The surface tension means a value measured at 25°C.
The surface tension is a value measured using a surface tensiometer, and can be measured using, for example, product name "Automatic Surface Tentiometer CBVP-Z (manufactured by Kyowa Interface Science Co., Ltd.)".

### Image Recording Method

The image recording method according to the present disclosure includes a step of applying the above-described ink according to the present disclosure onto a base material for image recording, containing a polymer including vinyl chloride as a constitutional unit, by an ink jet recording method to record an image (hereinafter, also referred to as an image recording step).
Since the ink according to the present disclosure is used, the image recording method according to the present disclosure exhibits the same effects as the effects of the ink according to the present disclosure described above (that is, the effect of improving the lamination strength and the effect of improving the blocking resistance).

### Image Recording Step

The image recording step is a step of applying the above-described ink according to the present disclosure onto a base material for image recording, containing a polymer including vinyl chloride as a constitutional unit, by an ink jet recording method to record an image.

### Base Material for Image Recording

The base material for image recording in the image recording step contains a polymer including vinyl chloride as a constitutional unit.
The polymer including vinyl chloride as a constitutional unit may be a homopolymer of vinyl chloride (that is, polyvinyl chloride), or may be a copolymer including vinyl chloride and a monomer other than the vinyl chloride as a constitutional unit.
Examples of the copolymer including vinyl chloride and a monomer other than the vinyl chloride as a constitutional unit include a vinyl chloride-urethane copolymer, a vinyl chloride-ethylene copolymer, a vinyl chloride-vinyl acetate copolymer, a vinyl chloride-vinyl acetate-maleic acid copolymer, a vinyl chloride-vinyl acetate-vinyl alcohol copolymer, and a vinyl chloride-ethylene-vinyl acetate copolymer.
Among these, the base material for image recording preferably contains polyvinyl chloride.
The base material for image recording may contain a component other than the polymer including vinyl chloride as a constitutional unit. Examples of other components include a plasticizer, a stabilizer, an antioxidant, an ultraviolet absorbing agent, a binder resin, and a white pigment.
The base material for image recording may include a layer containing the polymer including vinyl chloride as a constitutional unit and a surface-treated layer, but from the viewpoint of obtaining the adhesiveness between the base material for image recording and the image by dissolving the ink in the base material for image recording, it is preferable that the base material for image recording does not include the surface-treated layer. That is, the surface of the base material for image recording to be applied with the ink preferably contains the polymer including vinyl chloride as a constitutional unit.

A thickness of the base material for image recording is not particularly limited, but is, for example, preferably 0.1 μm to 1,000 μm, more preferably 0.1 μm to 800 μm, and still more preferably 1 μm to 500 μm.

Application of Ink

In the image recording step, the ink is applied by an ink jet recording method.

The ejection method of the ink by the ink jet recording method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the ink onto the base material for image recording by the ink jet recording method can be performed by allowing the ink to be jetted from a nozzle of an ink jet head.

The way of using the ink jet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

The ink is preferably applied using an ink jet head having a resolution of 300 dpi or more (more preferably 600 dpi or more and still more preferably 800 dpi or more). Here, dpi is an abbreviation for dot per inch, and 1 inch is 2.54 cm.

From the viewpoint of obtaining a high-definition image, the amount of liquid droplets of the ink jetted from nozzles of the ink jet head is preferably 1 picoliter (pL) to 10 pL and more preferably 1.5 pL to 6 pL.

Heating Step

The image recording step may include a step of heating the applied ink after the ink is applied onto the base material for image recording (hereinafter, also referred to as "heating step").

A heating temperature is preferably 30°C to 90°C and more preferably 30°C to 50°C.

Examples of the method of the heating include a method using infrared rays (IR), hot air, and heating using a heating device (for example, a heater, a hot plate, a heating furnace, or the like).

The heating can be performed by heating the ink from at least one of an image-recorded surface side or an image non-recorded surface side of the base material for image recording.

Active energy ray irradiating step

The image recording step preferably includes a step of applying the ink onto the base material for image recording and then irradiating the applied ink with active energy ray (hereinafter, also referred to as "active energy ray irradiating step").

By irradiating the ink applied onto the base material for image recording with active energy ray, a polymerization reaction of the polymerizable compound contained in the ink proceeds. As a result, the image can be fixed, and a hardness or the like of the image can be improved.

Examples of the active energy ray include ultraviolet rays, visible rays, and electron beams. Among these, ultraviolet rays are preferable as the active energy ray.

A peak wavelength of the ultraviolet rays is preferably 200 nm to 405 nm and more preferably 220 nm to 390 nm.

The exposure amount of ultraviolet rays is preferably 20 mJ/cm$^2$ to 5 J/cm$^2$ and more preferably 100 mJ/cm$^2$ to 1,500 mJ/cm$^2$. As irradiation conditions and basic irradiation method, irradiation conditions and irradiation method described in JP 1985-132767A (JP-S60-132767A) can be adopted. Specifically, the irradiation method is preferably a

method of providing a light source on both sides of a head unit including an ink jet device and scanning the substrate by the head unit and the light source by a so-called shuttle method, or a method of irradiating the substrate with another light source that is not involved in driving.

As a light source for the ultraviolet irradiation, a discharge lamp or a laser light source (such as a gas laser and a solid-state laser) is mainly used, and as the discharge lamp, for example, a mercury lamp, a metal halide lamp, and an ultraviolet fluorescent lamp are widely known. In addition, a semiconductor light source such as ultraviolet light emitting diode (UV-LED) and ultraviolet laser diode (UV-LD) is expected as the light source for the ultraviolet irradiation because it is compact, has long service life and high efficiency, and is inexpensive. Among these, a metal halide lamp, a high-pressure mercury lamp, a medium-pressure mercury lamp, a low-pressure mercury lamp, or UV-LED is preferable as the light source for the ultraviolet irradiation.

Manufacturing Method of Laminate

The manufacturing method of a laminate according to the present disclosure includes a step of obtaining an image recorded material including the base material for image recording and the image by the above-described image recording method according to the present disclosure, and a step (hereinafter, also referred to as a laminating step) of laminating the image recorded material and a base material for lamination, containing a polymer including vinyl chloride as a constitutional unit, in an arrangement in which the image in the image recorded material and the base material for lamination face each other, to obtain a laminate.

Since the image recording method according to the present disclosure is included, the manufacturing method of a laminate according to the present disclosure exhibits the same effects as the effects of the ink according to the present disclosure described above (that is, the effect of improving the lamination strength and the effect of improving the blocking resistance).

Step of Obtaining Image Recorded Material

The step of obtaining an image recorded material can refer to the image recording method according to the present disclosure described above.

Laminating Step

The laminating step is a step of laminating the above-described image recorded material (that is, an image recorded material including the base material for image recording and the image) and a base material for lamination, containing a polymer including vinyl chloride as a constitutional unit, in an arrangement in which the image in the image recorded material and the base material for lamination face each other, to obtain a laminate.

Base Material for Lamination

A preferred aspect of the base material for lamination is the same as the preferred aspect of the base material for image recording described above, and thus the description thereof will be omitted.

Laminating Method

In the laminating step, the lamination is carried out with an arrangement in which the image and the base material for lamination face each other.

In this case, the image and the base material for lamination may be laminated in contact with each other, or may be laminated through another layer.

However, from the viewpoint of more effectively exhibiting the effect of improving the lamination strength, it is preferable that the image and the base material for lamination are laminated in the laminating step such that the image and the base material for lamination are in contact with each other. As a result, a laminate having a laminated structure of base material for lamination/image/base material for image recording is obtained.

In the laminating step, it is preferable that the image and the base material for lamination are subjected to thermocompression bonding at a temperature of 100°C or higher. Since the weighted average value of Tg of the homopolymers of the polymerizable monomers contained in the ink is 0°C to 50°C, the image and the base material for lamination are effectively thermally fused by thermocompression bonding at a temperature of 50°C or higher, and the adhesiveness between the image and the base material for lamination is further improved.

The temperature of the thermocompression bonding is more preferably 100°C or higher.

From the viewpoint of suppressing thermal decomposition, the upper limit value of the temperature in a case of

performing the thermocompression bonding is preferably 200°C, more preferably 160°C, and still more preferably 140°C.
The temperature during the thermocompression bonding means a surface temperature of the base material for lamination.
A pressure during the thermocompression bonding is preferably 0.1 MPa to 20 MPa and more preferably 0.5 MPa to 15 MPa.
A time for the thermocompression bonding is, for example, 10 seconds to 500 seconds.
The thermocompression bonding may be performed in two stages. For example, a pressure at the first stage may be set to 0.5 MPa to 5 MPa, and a pressure at the second stage may be set to 6 MPa to 15 MPa, which is higher than the pressure at the first stage.
The laminate obtained by the manufacturing method of a laminate according to the present disclosure can be used, for example, as a floor material or a wall material of a transportation device (railway, bus, or the like), or a floor material or a wall material of a building.

## Examples

Hereinafter, the present disclosure will be described in more detail using Examples. However, the present disclosure is not limited to the following examples as long as it does not exceed the gist of the present invention.
Hereinafter, the photopolymerization initiator may be simply referred to as "initiator".

### Examples 1 to 24 and Comparative Examples 1 to 3

### Preparation of Cyan Pigment Dispersion Liquid

The following components were mixed together and stirred at 2,500 rpm for 10 minutes using a mixer (L4R manufactured by Silverson Machines, Inc.) to obtain a mixture. Thereafter, the obtained mixture was put into a beads mill disperser DISPERMAT LS (manufactured by VMA-GETZMANN GMBH), and using a YTZ ball (manufactured by Nikkato Corporation) having a diameter of 0.65 mm, the mixture was dispersed at 2,500 rpm for 6 hours to obtain a cyan pigment dispersion liquid.

- · Cyan pigment (Pigment Blue 15:3 (PB15:3); product name "IRGALITE BLUE GLVO", manufactured by BASF) ... 30% by mass
- · Dispersing agent (BYK-168; product name "DISPERSE BYK-168", manufactured by BYK-Chemie GmbH) ... 20% by mass
- · DVE-3 (triethylene glycol divinyl ether (bifunctional monomer), manufactured by BASF) ... 50% by mass

### Preparation of Ink

The above-described cyan pigment dispersion liquid and components other than the components contained in the cyan pigment dispersion liquid, which are described in Tables 1 to 4, were mixed so as to have the contents described in Tables 1 to 4, thereby preparing an ink.
Details of each component other than the cyan pigment, the dispersing agent, and DVE-3 in Tables 1 to 4 are as follows.

### Polymerizable Monomer

### Monomer A

- · THFA: tetrahydrofurfuryl acrylate
- · EOEOEA: etoxyethyethygolicol acrylate
- · CHA: cyclohexyl acrylate
- · IBOA: isobornyl acrylate
- · 4-HBA: 4-hydroxybutyl acrylate
- · PEA ... phenoxyethyl acrylate

N-vinyl Compound

· NVC: N-vinylcaprolactam

Other Compounds

· LA: lauryl acrylate
· IOA: isooctyl acrylate
· ACMO: 4-acryloyl morpholine
· DVE-3 (bifunctional): triethylene glycol divinyl ether (bifunctional monomer, manufactured by BASF)

Sensitizing Dye

· DETX: 2,4-diethylthioxanthen-9-one

Photopolymerization Initiatorα-Aminoketone-type Photopolymerization Initiator having Molecular weight of 600 or more

· Omni. 910: polyethylene glycol di(β-4-[4-(2-dimethylamino-2-benzyl)butanoylphenyl]piperazine)propionate (product name "Omnipol 910", manufactured by IGM Resins B.V; structure is as follows)

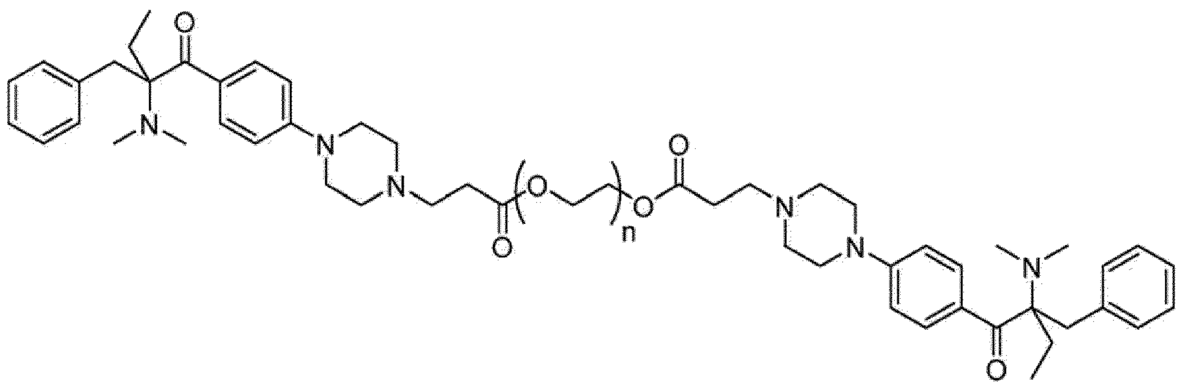

· Initiator 4:

2,8-diallyl-2,8-bis-dimethylamino-1,9-bis-[4-(2-hydroxy-ethylamino)-phenyl]-nonane-1,9-dione (structure is as follows;
synthesis was carried out by a method described in paragraphs 0260 to 0271 of JP2007-525573A)

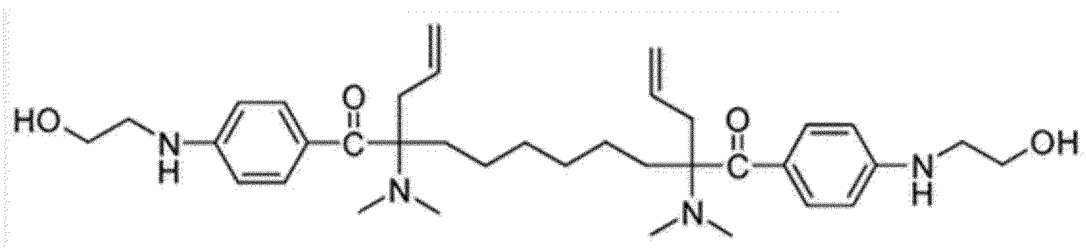

· Initiator 5:

1-piperazinepropionic acid, 4,4'-[1,4-piperazinediylbis[carbonyl-4,1-phenylene[2-(dodecylmethylamino)-2-ethyl-1-oxo-3,1-propanediyl]-4,1-phenylene]]bis-,1,1'-bis(13-oxo-3,6,9,12-tetraoxapentadeca-14-en-1-yl) ester (struc-

ture is as follows)

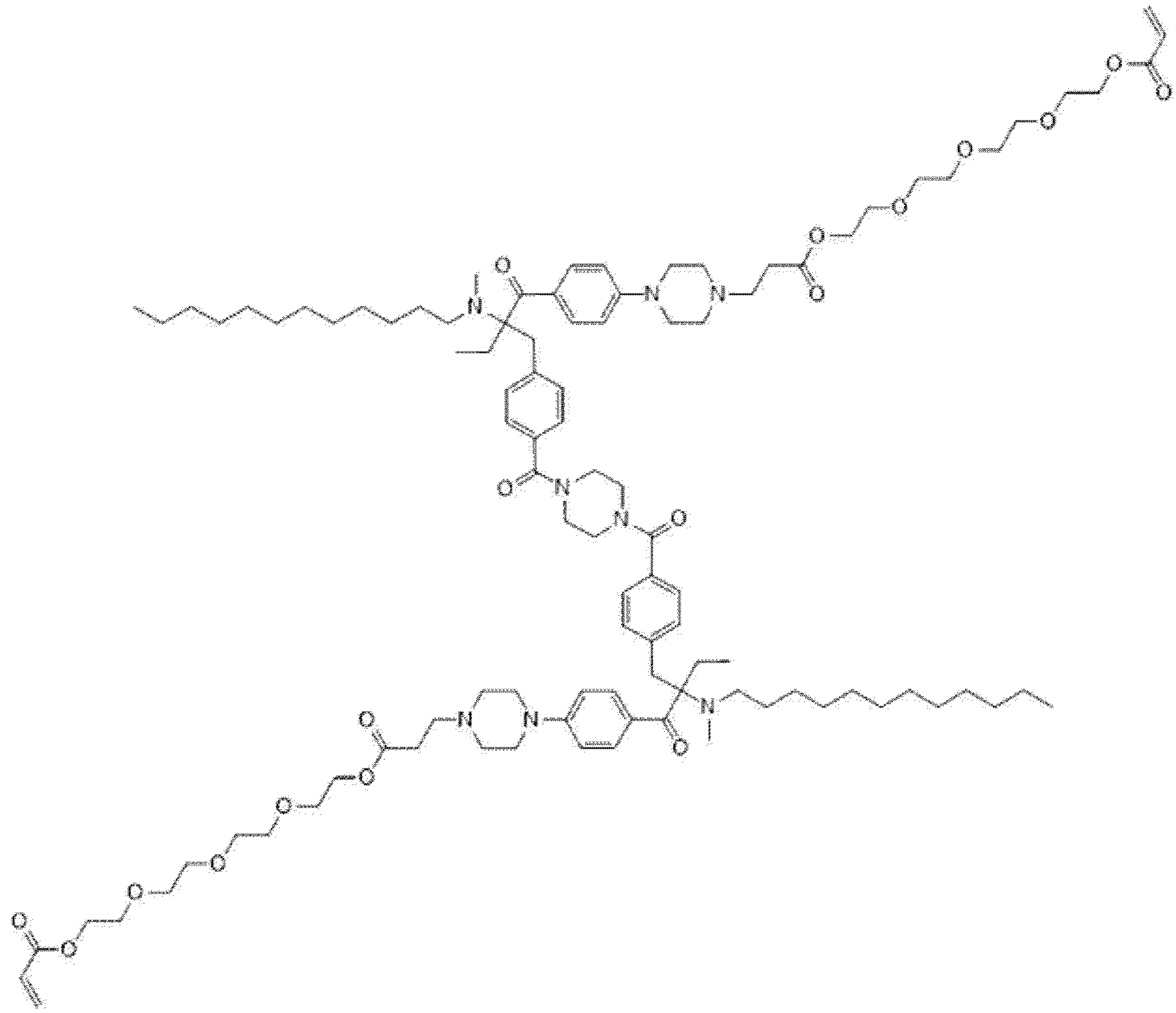

The initiator 5 was synthesized by a method described in paragraphs 0128 to 0186 of WO2017/195428A.

In the step I, fluorobenzene was used as the halogenated benzene, and 2-bromobutyric acid chloride was used as the acid halide compound having a halide atom at the α-position.

In the step II, methyldodecylamine was used as the secondary monoamine compound.

In the step III, methyl bromomethylbenzoate was used as the benzyl bromide having a substituent ($-Y_3-C(=O)-OR$) in the aromatic ring (here, R is an alkyl group or a hydrogen atom).

Piperazine was used in General Formula 4 of the step IV.

Piperazine was used in General Formula 5 of the step V.

The step VI was synthesized in the step VI-8 so that the structure of Y1 was the same as that of the exemplary compound M1.

Acylphosphine oxide-type Photopolymerization Initiator

- Omni. 819: bis(2,4,6-trimethylbenzoyl)phenylphosphine oxide (product name "Omnirad 819", manufactured by IGM Resins B.V.)

Other Initiators

- Omni. 369: 2-benzyl-2-(dimethylamino)-4'-morpholinobutyrophenone (product name "Omnirad 369", manufactured by IGM Resins B.V) [α-aminoketone-type photopolymerization initiator having a molecular weight of less than 600]

Polymerization Inhibitor

- TEMPOL: 4-hydroxy-2,2,6,6-tetramethylpiperidine-1-oxyl

Resin T (containing HEMA)

- Resin T-1 ... copolymer of NVC/HEMA/one terminal methacrylic-modified silicone = 85/5/10 (mass ratio); a synthesis method is as follows.
- Resin T-2 ... copolymer of NVC/HEMA/one terminal methacrylic-modified silicone = 70/20/10 (mass ratio); a synthesis method is as follows.

Synthesis of Resin T-1 (copolymer of NVC/HEMA/one terminal methacrylic-modified silicone = 85/5/10 (mass ratio))

1-propanol (203.7 g) and N-vinylcaprolactam (NVC) (127.5 g) were weighed and charged into a 1 L three-neck flask equipped with a cooling pipe, and the mixture was heated and stirred at 75°C under a nitrogen stream. Separately, a mixed solution prepared by mixing 1-propanol (135.8 g), hydroxyethyl methacrylate (HEMA) (7.5 g), X-22-174ASX (one terminal methacrylic-modified silicone) (manufactured by Shin-Etsu Chemical Co., Ltd.) (15.0 g), and V-601 (dimethyl 2,2'-azobis(isobutyronitrile); polymerization initiator manufactured by FUJIFILM Wako Pure Chemical Corporation) (10.5 g) was added dropwise to the above-described flask over 3 hours. After completion of the dropwise addition, the mixture was further stirred at 75°C for 1 hour, the temperature was raised to 90°C, and the mixture was further reacted for 3 hours. The mixture was allowed to cool to room temperature (25°C; the same applies hereinafter), phenoxyethyl acrylate (PEA) (350.0 g) and 4-hydroxy-2,2,6,6-tetramethylpiperidine-1-oxyl (TEMPOL) (3.5 g) were added thereto, and 1-propanol was distilled off under reduced pressure conditions of 80°C/50 hPa to obtain a 30 mass% solution of phenoxyethyl acrylate of a resin T-1 (a copolymer of NVCL/HEMA/one terminal methacrylic-modified silicone = 85/5/10 (mass ratio)). A weight-average molecular weight of the resin T-1 was 5,000.

Synthesis of Resin T-2 (copolymer of NVC/HEMA/one terminal methacrylic-modified silicone = 70/20/10 (mass ratio))

1-propanol (81.6 g) was weighed and charged into a 1 L three-neck flask equipped with a cooling pipe, and the mixture was heated and stirred at 90°C under a nitrogen stream. Separately, a dropping solution 1 prepared by mixing 1-propanol (27.2 g), hydroxyethyl methacrylate (HEMA) (12.0 g), X-22-174ASX (one terminal methacrylic-modified silicone) (manufactured by Shin-Etsu Chemical Co., Ltd.) (6.0 g), and V-601 (dimethyl 2,2'-azobis(isobutyronitrile); polymerization initiator manufactured by FUJIFILM Wako Pure Chemical Corporation) (3.0 g), and a dropping solution 2 prepared by mixing 1-propanol (27.2 g) and N-vinylcaprolactam (NVC) (42.0 g) were prepared. The dropping solution 1 was added dropwise to the above-described flask over 2 hours, and then the dropping solution 2 was added dropwise to the flask at a constant speed over 1 hour. After the completion of the dropwise addition of the dropping solution 1, the solution was further stirred for 1 hour, V-601 (1.7 g) was further added thereto, and the mixture was further reacted for 3 hours. The mixture was allowed to cool to room temperature (25°C; the same applies hereinafter), phenoxyethyl acrylate (PEA) (140.0 g) and 4-hydroxy-2,2,6,6-tetramethylpiperidine-1-oxyl (TEMPOL) (1.4 g) were added thereto, and 1-propanol was distilled off under reduced pressure conditions of 80°C/50 hPa to obtain a 30 mass% solution of phenoxyethyl acrylate of a resin T-2 (a copolymer of NVCL/HEMA/one terminal methacrylic-modified silicone = 70/20/10 (mass ratio)). A weight-average molecular weight of the resin T-2 was 10,000.

Resin T (not containing HEMA)

- Resin T-3 ... copolymer of NVC/THFA/one terminal methacrylic-modified silicone = 60/30/10 (mass ratio); a synthesis method is as follows.

Synthesis of Resin T-3 (copolymer of NVC/THFA/one terminal methacrylic-modified silicone = 60/30/10 (mass ratio))

1-propanol (205.5 g) and N-vinylcaprolactam (NVC) (90.0 g) were weighed and charged into a 1 L three-neck flask equipped with a cooling pipe, and the mixture was heated and stirred at 75°C under a nitrogen stream. Separately, a

mixed solution prepared by mixing 1-propanol (137.0 g), tetrahydrofurfuryl acrylate (THFA) (45.0 g), X-22-174ASX (one terminal methacrylic-modified silicone) (manufactured by Shin-Etsu Chemical Co., Ltd.) (15.0 g), and V-601 (dimethyl 2,2'-azobis(isobutyronitrile); polymerization initiator manufactured by FUJIFILM Wako Pure Chemical Corporation) (7.5 g) was added dropwise to the above-described flask over 3 hours. After completion of the dropwise addition, the mixture was further stirred at 75°C for 1 hour, the temperature was raised to 90°C, and the mixture was further reacted for 3 hours. The mixture was allowed to cool to room temperature (25°C; the same applies hereinafter), phenoxyethyl acrylate (350.0 g) and 4-hydroxy-2,2,6,6-tetramethylpiperidine-1-oxyl (TEMPOL) (3.5 g) were added thereto, and 1-propanol was distilled off under reduced pressure conditions of 80°C/50 hPa to obtain a 30 mass% solution of phenoxyethyl acrylate of a resin T-3 (a copolymer of NVCL/THFA/one terminal methacrylic-modified silicone = 60/30/10 (mass ratio)). A weight-average molecular weight of the resin T-3 was 17,000.

Production of Image Recorded Material

As a base material for image recording, a polyvinyl chloride base material (product name "PVC35phr", manufactured by OKAMOTO INDUSTRIES, INC.) was prepared.

An ultraviolet (UV) irradiation device (Vzero manufactured by Integration Technology Ltd.) was attached to an ink jet printer (KEGON) manufactured by Affinity Co., Ltd. to prepare an ink jet printer modification machine. A drying time until the UV irradiation (that is, a time from landing of the ink jetted from the ink jet head on the base material for image recording to the UV irradiation) was adjusted to 10 seconds. The adjustment of the drying time until the UV irradiation was performed by adjusting a transportation speed (5 m/min to 25 m/min) and the timing of opening and closing an UV shutter.

The above-described ink was jetted from an ink jet head of the ink jet printer modification machine, and applied onto the base material for image recording. A resolution was set to 1200 dots per inch (dpi) × 600 dpi. Next, the applied ink was irradiated with UV (exposure amount: 1200 $mJ/cm^2$) by the above-described UV irradiation device to obtain an image.

As a result, an image recorded material including a base material for image recording and an image was obtained.

Production of Laminate

As a base material for lamination, a polyvinyl chloride base material (product name "SG800", manufactured by K&H Trading Co., Ltd., thickness: 75 μm) was used.

The base material for lamination was disposed on the image in the image recorded material obtained above (that is, on the image recorded on the base material for image recording). In this state, the image recorded material and the base material for lamination were thermocompression-bonded using a desktop automatic transfer press machine (product name "AF-54TEN", Asahi Seisakusho Ltd.). As a result, a laminate having a laminated structure of base material for image recording/image/base material for lamination was obtained.

A temperature in the thermocompression bonding was set to 130°C. The thermocompression bonding was carried out at a pressure of 2 MPa for 300 seconds, and then at a pressure of 10 MPa for 60 seconds.

Evaluation of Lamination Strength

An evaluation sample was produced by the following method.

An image recording sample of 3.2 cm × 3.2 cm was cut out from the image recorded material obtained above. In addition, a base material sample for lamination, having a size of 3.2 cm × 3.2 cm, was cut out from the base material for lamination.

A polyethylene terephthalate (PET) sheet having a thickness of 12 μm was disposed on the image-recorded surface of the image recording sample in a region of 1.0 cm × 3.2 cm including one side of the image recording sample. Next, a base material sample for lamination, having a size of 3.2 cm × 3.2 cm, was superimposed on the entire image-recorded surface of the image recording sample, the region (region of 1.0 cm × 3.2 cm) where the PET sheet had been disposed, and the region (region of 2.2 cm × 3.2 cm) where the PET sheet was not disposed.

In this state, the image recording sample and the base material sample for lamination were laminated under the same conditions as in the above-described laminating step. An evaluation sample was obtained by removing the PET sheet from the obtained laminate.

In the evaluation sample, the region where the PET sheet was not disposed before the laminating step was adhered to the image recording sample and the base material sample for lamination. On the other hand, in the evaluation sample, the region where the PET sheet had been disposed before the laminating step was not adhered to the image recording sample and the base material sample for lamination.

Next, in the region where the image-recording sample and the base material sample for lamination were not adhered, a peeling strength (that is, a lamination strength) was measured by performing a tensile test of pulling the image

recording sample and the base material sample for lamination in opposite directions. The tensile test was carried out using a tensile tester (product name "Autograph AGS-X 5KN", manufactured by Shimadzu Corporation). Two evaluation samples were produced, and a tensile test was performed twice. The average value of the two times of the lamination strength was adopted. The evaluation standard was as follows.

In the following evaluation standard, the rank at which the lamination strength was most excellent is "5".

Evaluation Standard for Lamination Strength

5: lamination strength was 7 N/cm or more.
4: lamination strength was 3 N/cm or more and less than 7 N/cm.
3: lamination strength was 2 N/cm or more and less than 3 N/cm.
2: lamination strength was 1 N/cm or more and less than 2 N/cm.
1: lamination strength was 0.1 N/cm or more and less than 1 N/cm.
0: lamination strength was less than 0.1 N/cm.

Evaluation of Blocking Resistance

An image recording sample of 2.2 cm × 2.2 cm was cut out from the image recorded material obtained above.

Both surfaces of the obtained image recording sample were sandwiched between the polyvinyl chloride base materials of 2.2 cm × 2.2 cm, both surfaces of the obtained laminate were sandwiched between aluminum plates, and both surfaces of the obtained laminate were sandwiched between acrylic plates. In this manner, a laminate for evaluation of blocking resistance, having a laminated structure of acrylic plate/aluminum plate/polyvinyl chloride base material/image recording sample (that is, the laminate of image/base material for image recording)/polyvinyl chloride base material/aluminum plate/acrylic plate, was obtained.

The obtained laminate for evaluation of blocking resistance was placed in a direction in which a laminating direction was a direction of gravitational force, a weight of 2.5 kg was placed on one acrylic plate in the laminate for evaluation of blocking resistance in this state, and the laminate was allowed to stand at 70°C for 24 hours.

After allowing the laminate for evaluation of blocking resistance to stand for 24 hours, the laminate was peeled off at an interface between the image and the polyvinyl chloride base material in contact with the image, a transfer state of the image to the polyvinyl chloride base material in contact with the image was observed, and a proportion (area%) of an area of the image transferred to the polyvinyl chloride base material to the total area of the polyvinyl chloride base material was measured.

Based on the obtained results, blocking resistance of the image was evaluated according to the following evaluation standard.

In the following evaluation standard, the rank at which the blocking resistance of the image was most excellent is "6".

Evaluation Standard for Blocking Resistance

6: no transfer
5: area of the image transferred to the polyvinyl chloride base material was more than 0% and 20% or less of the area of the polyvinyl chloride base material.
4: area of the image transferred to the polyvinyl chloride base material was more than 20% and 40% or less of the area of the polyvinyl chloride base material.
3: area of the image transferred to the polyvinyl chloride base material was more than 40% and 60% or less of the area of the polyvinyl chloride base material.
2: area of the image transferred to the polyvinyl chloride base material was more than 60% and 80% or less of the area of the polyvinyl chloride base material.
1: area of the image transferred to the polyvinyl chloride base material was more than 80% of the area of the polyvinyl chloride base material.

Evaluation of Jettability of Ink

Jettability was evaluated with an ink jet ejection evaluation device (drop watcher, manufactured by JetXpert)

equipped with an ink jet head (product name "Samba G3L", manufactured by FUJIFILM Corporation).

First, the above-described ink was jetted from a nozzle of the above-described ink jet head, and a test image was recorded on ink jet printing paper (Kassai, manufactured by FUJIFILM Corporation). In the test image, the number of missing nozzles was counted and denoted as N1.

Next, the ink was continuously jetted from the nozzle of the above-described ink jet head for 10 minutes.

After the continuous jetting, the ink was jetted again from the nozzle of the above-described ink jet head, and a test image was recorded on the above-described ink jet printing paper. In the test image, the number of missing nozzles was counted and denoted as N2.

Based on these results, an increase in missing nozzle $\Delta N = N2 - N1$ due to the continuous jetting for 10 minutes was calculated.

The above-described operation was repeated three times, the average value of ΔN of the three times was obtained, and the jettability of the ink was evaluated according to the following evaluation standard.

In the following evaluation standard, the rank at which the j ettability of the ink was most excellent is "5".

Jettability of Ink

5: average of ΔN was less than 1.2.
4: average of ΔN was 1.2 or more and less than 1.6.
3: average of ΔN was 1.6 or more and less than 2.0.
2: average of ΔN was 2.0 or more and less than 3.0.
1: average of ΔN was 3.0 or more.

The evaluation results are shown in Tables 1 to 4.

In Tables 1 to 4, the numerical value of the content of each component indicates % by mass with respect to the total amount of the ink, and a blank indicates that the corresponding component was not contained.

In Tables 1 to 4, the molecular weight of the polymerizable monomer and the α-aminoketone-type initiator are described, and the SP value ($MPa^{1/2}$) and the glass transition temperature (Tg) of the polymerizable monomer are described. Here, the Tg of the polymerizable monomer is Tg in a case where the corresponding polymerizable monomer was a homopolymer.

In Tables 1 to 4, "Weighted average value of Tg" indicates a weighted average value (°C) of glass transition temperatures in a case where all types of polymerizable monomers contained in the ink were homopolymers.

[Table 1]

| | | | Molecular weight | Tg (°C) | SP value Mpa$^{1/2}$) | Example 1 | Example 2 | Example 3 | Example 4 | Example 5 | Example 6 | Example 7 | Example 8 |
|---|---|---|---|---|---|---|---|---|---|---|---|---|---|
| Polymerizable monomer | Monomer A | THFA | 156 | -15 | 18.8 | | | | | | | | |
| | | EOEOEA | 188 | -54 | 18.2 | 8.3 | 8.3 | 8.3 | 8.4 | 12.4 | 7.6 | 5.3 | 5.3 |
| | | CHA | 154 | 15 | 17.9 | 45.5 | 45.5 | 45.5 | 46.1 | 49.7 | 41.7 | 18.5 | 18.5 |
| | | IBOA | 208 | 88 | 17.1 | | | | | | | | |
| | | 4-HBA | 144 | -32 | 21.0 | | | | | | | | |
| | | PEA | 192 | 5 | 19.4 | 2.3 | 2.3 | 2.3 | 2.3 | 2.3 | 2.3 | 2.3 | 2.3 |
| | N-vinyl compound | NVC | 139 | 90 | 19.2 | 290 | 29.0 | 29.0 | 29.3 | 20.7 | 26.5 | 29.0 | 29.0 |
| | Other monomers | LA | 240 | -30 | 16.7 | | | | | | | 30.0 | |
| | | IOA | 184 | -54 | 16.4 | | | | | | | | 30.0 |
| | | ACMO | 141 | 145 | 22.4 | | | | | | | | |
| | | DVE-3 (bifunctional) | 202 | 10 | 17.2 | 3.0 | 3.0 | 3.0 | 3.0 | 3.0 | 10.0 | 3.0 | 3.0 |
| Colorant (pigment) | | PB15:3 | - | - | - | 1.8 | 1.8 | 1.8 | 1.8 | 1.8 | 1.8 | 1.8 | 1.8 |
| Dispersing agent | | BYK-168 | - | - | - | 1.2 | 1.2 | 1.2 | 1.2 | 1.2 | 1.2 | 1.2 | 1.2 |
| Sensitizing dye | | DETX | - | - | - | 2.0 | 2.0 | 2.0 | 2.0 | 2.0 | 2.0 | 2.0 | 2.0 |
| Photopolymerization initiator | α-aminoketone-type initiator having molecular weight of less than 600 | Omni.910 | 1051 | - | - | 2.8 | 2.8 | 2.8 | 2.8 | 2.8 | 2.8 | 2.8 | 2.8 |
| | | Initiator 4 | 610 | - | - | | | | | | | | |
| | | Initiator 5 | 1782 | - | - | | | | | | | | |
| | Acylphosphine oxide-type initiator | Omni.819 | - | - | - | 2.8 | 2.8 | 2.8 | 2.8 | 2.8 | 2.8 | 2.8 | 2.8 |
| | | TPO-L | - | - | - | | | | | | | | |
| | Other initiators | Omni.369 | 367 | - | - | | | | | | | | |
| Polymerization inhibitor | | TEMPOL | - | - | - | 0.3 | 0.3 | 0.3 | 0.3 | 0.3 | 0.3 | 0.3 | 0.3 |

(continued)

| | | | Molecular weight | Tg (°C) | SP value Mpa$^{1/2}$) | Example 1 | Example 2 | Example 3 | Example 4 | Example 5 | Example 6 | Example 7 | Example 8 |
|---|---|---|---|---|---|---|---|---|---|---|---|---|---|
| Resin T | Containing HEMA | Resin T-1 | - | - | - | 1.0 | | | | 1.0 | 1.0 | 1.0 | 1.0 |
| | | Resin T-2 | - | - | - | | 1.0 | | | | | | |
| | Not containing HEMA | Resin T-3 | - | - | - | | | 1.0 | | | | | |
| Weighted average value of Tg | | | | | | 32.7 | 32.7 | 32.7 | 32.8 | 22.5 | 30.8 | 19.8 | 11.6 |
| Content mass ratio [α-aminoketone-type initiator having molecular weight of less than 600/acylphosphine oxide-type initiator] | | | | | | 1.0 | 1.0 | 1.0 | 1.0 | 1.0 | 1.0 | 1.0 | 1.0 |
| Content mass ratio [α-aminoketone-type initiator having molecular weight of less than 600/sensitizing dye] | | | | | | 1.4 | 1.4 | 1.4 | 1.4 | 1.4 | 1.4 | 1.4 | 1.4 |
| Amount of monomer M1 having Tg of 90°C or higher with respect to total amount of ink | | | | | | 29.0 | 29.0 | 29.0 | 29.3 | 20.7 | 26.5 | 29.0 | 29.0 |
| Amount of monomer M2 having Tg of 30°C or lower with respect to total amount of ink | | | | | | 56.1 | 56.1 | 56.1 | 56.8 | 64.4 | 51.6 | 56.1 | 56.1 |
| Content mass ratio [monomer A/all polymerizable monomers] | | | | | | 0.64 | 0.64 | 0.64 | 0.64 | 0.73 | 0.59 | 0.30 | 0.30 |
| Content mass ratio [monomer having molecular weight of 215 or less/all polymerizable monomers] | | | | | | 1.00 | 1.00 | 1.00 | 1.00 | 1.00 | 1.00 | 0.66 | 1.00 |
| Content mass ratio [monofunctional monomer/all polymerizable monomers] | | | | | | 0.97 | 0.97 | 0.97 | 0.97 | 0.97 | 0.89 | 0.97 | 0.97 |
| Content mass ratio [N-vinyl compound/all polymerizable monomers] | | | | | | 0.33 | 0.33 | 0.33 | 0.33 | 0.23 | 0.30 | 0.33 | 0.33 |
| Evaluation | Blocking resistance | | | | | 6 | 6 | 5 | 4 | 4 | 6 | 6 | 5 |
| | Lamination strength | | | | | 5 | 5 | 5 | 5 | 3 | 3 | 3 | 3 |
| | Jettability | | | | | 5 | 5 | 5 | 5 | 5 | 5 | 5 | 5 |

[Table 2]

| | | | Molecular weight | Tg (°C) | SP value (MPa$^{1/2}$) | Example 9 | Example 10 | Example 11 | Example 12 | Example 13 | Example 14 | Example 15 | Example 16 |
|---|---|---|---|---|---|---|---|---|---|---|---|---|---|
| Polymerizable monomer | Monomer A | THFA | 156 | -15 | 18.8 | | | | | | | | |
| | | EOEOEA | 188 | -54 | 18.2 | 28.5 | | 8.3 | 12.4 | 8.3 | 8.6 | 8.2 | 8.4 |
| | | CHA | 154 | 15 | 17.9 | 9.7 | | 57.9 | 19.8 | 45.5 | 47.0 | 45.0 | 46.1 |
| | | IBOA | 208 | 88 | 17.1 | | 12.8 | | | 29.0 | | | |
| | | 4-HBA | 144 | -32 | 21.0 | | 40.0 | | | | | | |
| | | PEA | 192 | 5 | 19.4 | 2.3 | 2.3 | 2.3 | 2.3 | 2.3 | 2.3 | 2.3 | 2.3 |
| | N-vinyl compound | NVC | 139 | 90 | 19.2 | 26.6 | 29.9 | 16.6 | 50.6 | | 29.9 | 28.6 | 29.3 |
| | Other monomers | LA | 240 | -30 | 16.7 | | | | | | | | |
| | | IOA | 184 | -54 | 16.4 | | | | | | | | |
| | | ACMO | 141 | 145 | 224 | 18.0 | | | | | | | |
| | | DVE-3 (bifunctional) | 202 | 10 | 17.2 | 3.0 | 3.0 | 3.0 | 3.0 | 3.0 | 3.0 | 3.0 | 3.0 |
| Colorant (pigment) | | PB15:3 | - | - | - | 1.8 | 1.8 | 1.8 | 1.8 | 1.8 | 1.8 | 1.8 | 1.8 |
| Dispersing agent | | BYK-168 | - | - | - | 1.2 | 1.2 | 1.2 | 1.2 | 1.2 | 1.2 | 1.2 | 1.2 |
| Sensitizing dye | | DETX | - | - | - | 2.0 | 2.0 | 2.0 | 2.0 | 2.0 | 2.0 | 3.0 | 1.0 |
| Photopolymerization initiator | α-aminoketone-type initiator having molecular weight of less than 600 | Omni.910 | 1051 | - | - | 2.8 | 2.8 | 2.8 | 2.8 | 2.8 | 0.015 | 3.5 | 2.8 |
| | | Initiator 4 | 610 | - | - | | | | | | | | |
| | | Initiator 5 | 1782 | - | - | | | | | | | | |
| | Acylphosphine oxide-type initiator | Omni.819 | - | - | - | 2.8 | 2.8 | 2.8 | 2.8 | 2.8 | 2.8 | 2.1 | 2.8 |
| | | TPO-L | - | - | - | | | | | | | | |
| | Other initiators | Omni.369 | 367 | - | - | | | | | | | | |
| Polymerization inhibitor | | TEMPOL | - | - | - | 0.3 | 0.3 | 0.3 | 0.3 | 0.3 | 0.3 | 0.3 | 0.3 |

(continued)

| | | | Molecular weight | Tg (°C) | SP value ($MPa^{1/2}$) | Example 9 | Example 10 | Example 11 | Example 12 | Example 13 | Example 14 | Example 15 | Example 16 |
|---|---|---|---|---|---|---|---|---|---|---|---|---|---|
| Resin T | Containing HEMA | Resin T-1 | - | - | - | 1.0 | 1.0 | 1.0 | 1.0 | 1.0 | 1.0 | 1.0 | 1.0 |
| | | Resin T-2 | - | - | - | | | | | | | | |
| | Not containing HEMA | Resin T-3 | - | - | - | | | | | | | | |
| Weighted average value of Tg | | | | | | 41.4 | 29.3 | 22.2 | 47.9 | 32.1 | 32.8 | 32.7 | 32.8 |
| Content mass ratio [α-aminoketone-type initiator having molecular weight of less than 600/acylphosphine oxide-type initiator] | | | | | | 1.0 | 1.0 | 1.0 | 1.0 | 1.0 | 0.005 | 1.7 | 1.0 |
| Content mass ratio [α-aminoketone-type initiator having molecular weight of less than 600/sensitizing dye] | | | | | | 1.4 | 1.4 | 1.4 | 1.4 | 1.4 | 0.008 | 1.2 | 2.8 |
| Amount of monomer M1 having Tg of 90°C or higher with respect to total amount of ink | | | | | | 44.6 | 29.9 | 16.6 | 50.6 | 0 | 29.9 | 28.6 | 29.3 |
| Amount of monomer M2 having Tg of 30°C or lower with respect to total amount of ink | | | | | | 40.5 | 42.3 | 68.5 | 34.5 | 56.1 | 57.9 | 55.5 | 56.8 |
| Content mass ratio [monomer A/all polymerizable monomers] | | | | | | 0.46 | 0.63 | 0.78 | 0.39 | 0.97 | 0.64 | 0.64 | 0.64 |
| Content mass ratio [monomer having molecular weight of 215 or less/all polymerizable monomers] | | | | | | 1.00 | 1.00 | 1.00 | 1.00 | 1.00 | 1.00 | 1.00 | 1.00 |
| Content mass ratio [monofunctional monomer/all polymerizable monomers] | | | | | | 0.97 | 0.97 | 0.97 | 0.97 | 0.97 | 0.97 | 0.97 | 0.97 |
| Content mass ratio [N-vinyl compound/all polymerizable monomers] | | | | | | 0.30 | 0.34 | 0.19 | 0.57 | 0.00 | 0.33 | 0.33 | 0.33 |
| Evaluation | Blocking resistance | | | | | 6 | 6 | 4 | 5 | 4 | 4 | 4 | 4 |
| | Lamination strength | | | | | 3 | 4 | 4 | 3 | 3 | 5 | 3 | 3 |
| | Jettability | | | | | 5 | 5 | 5 | 5 | 5 | 5 | 5 | 5 |

[Table 3]

| | | | Molecular weight | Tg (°C) | SP value (MPa$^{1/2}$) | Example 17 | Example 18 | Example 19 | Example 20 | Example 21 | Example 22 | Example 23 | Example 24 |
|---|---|---|---|---|---|---|---|---|---|---|---|---|---|
| Polymerizable monomer | Monomer A | THFA | 156 | -15 | 18.8 | | | | | | | | |
| | | EOEOEA | 188 | -54 | 18.2 | 8.3 | 8.3 | 8.0 | 8.1 | 7.8 | 8.3 | 8.0 | 7.9 |
| | | CHA | 154 | 15 | 17.9 | 45.5 | 45.5 | 44.0 | 44.3 | 42.8 | 45.5 | 43.9 | 43.2 |
| | | IBOA | 208 | 88 | 17.1 | | | | | | | | |
| | | 4-HBA | 144 | -32 | 21.0 | | | | | | | | |
| | | PEA | 192 | 5 | 19.4 | 2.3 | 2.3 | 2.3 | 2.3 | 2.3 | 2.3 | 2.3 | 2.3 |
| | N-vinyl compound | NVC | 139 | 90 | 19.2 | 29.0 | 29.0 | 28.0 | 28.2 | 27.2 | 28.9 | 28.0 | 27.5 |
| | Other monomers | LA | 240 | -30 | 16.7 | | | | | | | | |
| | | IOA | 184 | -54 | 16.4 | | | | | | | | |
| | | ACMO | 141 | 145 | 22.4 | | | | | | | | |
| | | DVE-3 (bifunctional) | 202 | 10 | 17.2 | 3.0 | 3.0 | 3.0 | 3.0 | 3.0 | 3.0 | 3.0 | 3.0 |
| Colorant (pigment) | | PB15:3 | - | - | - | 1.8 | 1.8 | 1.8 | 1.8 | 1.8 | 1.8 | 1.8 | 1.8 |
| Dispersing agent | | BYK-168 | - | - | - | 1.2 | 1.2 | 1.2 | 1.2 | 1.2 | 1.2 | 1.2 | 1.2 |
| Sensitizing dye | | DETX | - | - | - | 2.0 | 2.0 | 2.0 | 2.0 | 2.0 | 2.0 | 2.0 | 4.0 |
| Photopolymerization initiator | α-aminoketone-type initiator having molecular weight of less than 600 | Omni.910 | 1051 | - | - | | | 2.8 | 2.8 | 2.8 | 0.7 | 0.7 | 2.8 |
| | | Initiator 4 | 610 | - | - | 2.8 | | | | | | | |
| | | Initiator 5 | 1782 | - | - | | 2.8 | | | | | | |
| | Acylphosphine oxide-type initiator | Omni.819 | - | - | - | 2.8 | 2.8 | 2.8 | 5.0 | 5.0 | 5.0 | 5.0 | 5.0 |
| | | TPO-L | - | - | - | | | 2.8 | | 2.8 | | 2.8 | |
| | Other initiators | Omni.369 | 367 | - | - | | | | | | | | |
| Polymerization inhibitor | | TEMPOL | - | - | - | 0.3 | 0.3 | 0.3 | 0.3 | 0.3 | 0.3 | 0.3 | 0.3 |

(continued)

| | | | Molecular weight | Tg (°C) | SP value ($MPa^{1/2}$) | Example 17 | Example 18 | Example 19 | Example 20 | Example 21 | Example 22 | Example 23 | Example 24 |
|---|---|---|---|---|---|---|---|---|---|---|---|---|---|
| Resin T | Containing HEMA | Resin T-1 | - | - | - | 1.0 | 1.0 | 1.0 | 1.0 | 1.0 | 1.0 | 1.0 | 1.0 |
| | | Resin T-2 | - | - | - | | | | | | | | |
| | Not containing HEMA | Resin T-3 | - | - | - | | | | | | | | |
| Weighted average value of Tg | | | | | | 32.7 | 32.7 | 32.7 | 32.7 | 32.6 | 32.7 | 32.7 | 32.7 |
| Content mass ratio [α-aminoketone-type initiator having molecular weight of less than 600/acylphosphine oxide-type initiator] | | | | | | 1.0 | 1.0 | 0.5 | 0.6 | 0.4 | 0.1 | 0.1 | 0.6 |
| Content mass ratio [α-aminoketone-type initiator having molecular weight of less than 600/sensitizing dye] | | | | | | 1.4 | 1.4 | 1.4 | 1.4 | 1.4 | 0.4 | 0.4 | 0.7 |
| Amount of monomer M1 having Tg of 90°C or higher with respect to total amount of ink | | | | | | 29.0 | 29.0 | 28.0 | 28.2 | 27.2 | 28.9 | 28.0 | 27.5 |
| Amount of monomer M2 having Tg of 30°C or lower with respect to total amount of ink | | | | | | 56.1 | 56.1 | 54.3 | 54.7 | 52.9 | 56.1 | 54.2 | 53.4 |
| Content mass ratio [monomer A/all polymerizable monomers] | | | | | | 0.64 | 0.64 | 0.64 | 0.64 | 0.64 | 0.64 | 0.64 | 0.64 |
| Content mass ratio [monomer having molecular weight of 215 or less/all polymerizable monomers] | | | | | | 1.00 | 1.00 | 1.00 | 1.00 | 1.00 | 1.00 | 1.00 | 1.00 |
| Content mass ratio [monofunctional monomer/all polymerizable monomers] | | | | | | 0.97 | 0.97 | 0.96 | 0.97 | 0.96 | 0.97 | 0.96 | 0.96 |
| Content mass ratio [N-vinyl compound/all polymerizable monomers] | | | | | | 0.33 | 0.33 | 0.33 | 0.33 | 0.33 | 0.33 | 0.33 | 0.33 |
| Evaluation | Blocking resistance | | | | | 3 | 6 | 6 | 6 | 6 | 6 | 6 | 6 |
| | Lamination strength | | | | | 5 | 5 | 5 | 5 | 5 | 5 | 5 | 5 |
| | Jettability | | | | | 5 | 4 | 5 | 5 | 5 | 5 | 5 | 5 |

[Table 4]

| | | | Molecular weight | Tg (°C) | SP value ($MPa^{1/2}$) | Comparative Example 1 | Comparative Example 2 | Comparative Example 3 |
|---|---|---|---|---|---|---|---|---|
| Polymerizable monomer | Monomer A | THFA | 156 | -15 | 18.8 | | 12.4 | |
| | | EOEOEA | 188 | -54 | 18.2 | | 45.5 | 8.3 |
| | | CHA | 154 | 15 | 17.9 | 37.2 | | 45.5 |
| | | IBOA | 208 | 88 | 17.1 | 16.6 | | |
| | | 4-HBA | 144 | -32 | 21.0 | | | |
| | | PEA | 192 | 5 | 19.4 | 2.3 | 2.3 | 2.3 |
| | N-vinyl compound | NVC | 139 | 90 | 19.2 | 29.0 | 24.8 | 29.0 |
| | Other monomers | LA | 240 | -30 | 16.7 | | | |
| | | IOA | 184 | -54 | 16.4 | | | |
| | | ACMO | 141 | 145 | 22.4 | | | |
| | | DVE-3 (bifunctional) | 202 | 10 | 17.2 | 3.0 | 3.0 | 3.0 |
| Colorant (pigment) | | PB15:3 | - | - | - | 1.8 | 1.8 | 1.8 |
| Dispersing agent | | BYK-168 | - | - | - | 1.2 | 1.2 | 1.2 |
| Sensitizing dye | | DETX | - | - | - | 2.0 | 2.0 | 2.0 |
| Photopolymerization initiator | α-aminoketone-type initiator having molecular weight of less than 600 | Omni.910 | 1051 | - | - | 2.8 | 2.8 | |
| | | Initiator 4 | 610 | - | - | | | |
| | | Initiator 5 | 1782 | - | - | | | |
| | Acylphosphine oxide-type initiator | Omni.819 | - | - | - | 2.8 | 2.8 | 2.8 |
| | | TPO-L | - | - | - | | | |
| | Other initiators | Omni.369 | 367 | - | - | | | 2.8 |
| Polymerization inhibitor | | TEMPOL | - | - | - | 0.3 | 0.3 | 0.3 |

(continued)

| | | | Molecular weight | Tg (°C) | SP value ($MPa^{1/2}$) | Comparative Example 1 | Comparative Example 2 | Comparative Example 3 |
|---|---|---|---|---|---|---|---|---|
| Resin T | Containing HEMA | Resin T-1 | - | - | - | 1.0 | 1.0 | 1.0 |
| | | Resin T-2 | - | - | - | | | |
| | Not containing HEMA | Resin T-3 | - | - | - | | | |
| Weighted average value of Tg | | | | | | 52.9 | -4.2 | 32.7 |
| Content mass ratio [α-aminoketone-type initiator having molecular weight of less than 600/acylphosphine oxide-type initiator] | | | | | | 1.0 | 1.0 | 0 |
| Content mass ratio [α-aminoketone-type initiator having molecular weight of less than 600/sensitizing dye] | | | | | | 1.4 | 1.0 | 1.0 |
| Amount of monomer M1 having Tg of 90°C or higher with respect to total amount of ink | | | | | | 29.0 | 24.8 | 29.0 |
| Amount of monomer M2 having Tg of 30°C or lower with respect to total amount of ink | | | | | | 39.6 | 60.2 | 56.1 |
| Content mass ratio [monomer A/all polymerizable monomers] | | | | | | 0.64 | 0.68 | 0.64 |
| Content mass ratio [monomer having molecular weight of 215 or less/all polymerizable monomers] | | | | | | 1.00 | 1.00 | 1.00 |
| Content mass ratio [monofunctional monomer/all polymerizable monomers] | | | | | | 0.97 | 0.97 | 0.97 |
| Content mass ratio [N-vinyl compound/all polymerizable monomers] | | | | | | 0.33 | 0.28 | 0.33 |
| Evaluation | Blocking resistance | | | | | 6 | 1 | 2 |
| | Lamination strength | | | | | 1 | 5 | 5 |
| | Jettability | | | | | 5 | 5 | 5 |

As shown in Tables 1 to 4, in each of Examples in which the ink jet ink contained the polymerizable monomer and the α-aminoketone-type photopolymerization initiator having a molecular weight of 600 or more, and the weighted average value of glass transition temperatures in a case where all contained polymerizable monomer were homopolymers was 0°C to 50°C, the lamination strength of the laminate and the blocking resistance of the image were excellent.

Contrary to each of Examples, each of Comparative Examples showed the following results.

In Comparative Example 1 in which the weighted average value of the above-described glass transition temperatures was higher than 50°C, the lamination strength was reduced.

In Comparative Example 2 in which the weighted average value of the above-described glass transition temperatures was lower than 0°C, the blocking resistance was reduced.

In Comparative Example 3 in which the α-aminoketone-type photopolymerization initiator having a molecular weight of 600 or more was not contained and the α-aminoketone-type photopolymerization initiator having a molecular weight of less than 600 was contained, the blocking resistance was reduced. The reason for this is considered to be that the effect of curing properties in the vicinity of the surface of the ink film (that is, the image) by the α-aminoketone-type photopolymerization initiator having a molecular weight of 600 or more could not be obtained.

From the results of Examples 1 and 14, it was found that, in a case where the content mass ratio [α-aminoketone-type photopolymerization initiator having molecular weight of 600 or more/acylphosphine oxide-type photopolymerization initiator] was 0.010 or more (Example 1), the blocking resistance was further improved.

From the results of Examples 1 and 15, it was found that, in a case where the content mass ratio [α-aminoketone-type photopolymerization initiator having molecular weight of 600 or more/acylphosphine oxide-type photopolymerization initiator] was 1.5 or less (Example 1), the lamination strength and the blocking resistance were further improved.

From the results of Examples 1 and 14, it was found that, in a case where the content mass ratio [α-aminoketone-type photopolymerization initiator having molecular weight of 600 or more/sensitizing dye] was 0.010 or more (Example 1), the blocking resistance was further improved.

From the results of Examples 1 and 16, it was found that, in a case where the content mass ratio [α-aminoketone-type photopolymerization initiator having molecular weight of 600 or more/sensitizing dye] was 2.0 or less (Example 1), the lamination strength and the blocking resistance were further improved.

From the results of Examples 1 and 13, it was found that, in a case where the polymerizable monomer included the N-vinyl compound (Example 1), the lamination strength and the blocking resistance were further improved.

From the results of Examples 5 and 6, it was found that, in a case where the content mass ratio [N-vinyl compound/total polymerizable monomer] was 0.30 or more (Example 6), the blocking resistance was further improved.

From the results of Examples 1 and 11 to 13, it was found that, in a case where the content of the monomer M1 having a Tg of 90°C or higher was 20% by mass to 50% by mass and the content of the monomer M2 having a Tg of 30°C or lower was 35% by mass to 65% by mass (Example 1), the lamination strength and the blocking resistance were further improved.

From the results of Examples 1 and 12, it was found that, in a case where the polymerizable monomer included the monomer A having a (meth)acryloyl group, having a molecular weight of 215 or less, and having a solubility parameter of 16.5 $MPa^{1/2}$ to 21.5 $MPa^{1/2}$, and the content mass ratio [monomer A/total polymerizable monomer] was 0.50 or more (Example 1), the lamination strength was further improved.

From the results of Examples 1 and 7, it was found that, in a case where the content mass ratio [monomer having molecular weight of 215 or less/total polymerizable monomer] was 0.80 or more (Example 1), the lamination strength was further improved.

From the results of Examples 1 and 6, it was found that, in a case where the content mass ratio [monofunctional monomer/total polymerizable monomer] was 0.90 or more (Example 1), the lamination strength was further improved.

From the results of Examples 1 to 3, it was found that, in a case where the resin T in the ink, including at least one selected from the group consisting of a fluorinated hydrocarbon group, a polysiloxane group, and a hydrocarbon group having 12 or more carbon atoms (in the present example, a polysiloxane group) (Examples 1 and 2), had the HEMA unit (structural unit derived from hydroxyethyl methacrylate), the blocking resistance was further improved.

Examples 101 to 104

Examples 101 to 104 in which the ink formulation and the evaluation conditions for the lamination strength were changed as compared with Example 1 described above were performed.

Hereinafter, the details will be described.

In Table 5, for comparison, the evaluation results of the ink of Example 1 under the same evaluation conditions as those of the inks of Examples 101 to 104 are also shown.

## Preparation of Ink

The cyan pigment dispersion liquid used in the preparation of the ink in Example 1 and components other than the components contained in the cyan pigment dispersion liquid, which are described in Table 5, were mixed so as to have the contents described in Table 5, thereby preparing an ink.

In Table 5, "NPGPODA" as the monomer B is neopentyl glycol diacrylate, which is a bifunctional acrylate.

The meanings of the other terms described in Table 5 are the same as the meanings of the terms in Tables 1 to 4.

## Production of Image Recorded Material

As a base material for image recording, a polyvinyl chloride base material (product name "PVC35phr", manufactured by OKAMOTO INDUSTRIES, INC.) was prepared.

An ink jet recording device including an ink jet head (product name "Samba G3L", manufactured by FUJIFILM Corporation) and an LED light source (UV-LED irradiator having a peak wavelength of 385 nm (product name "G5A", manufactured by Kyocera Corporation)) was prepared.

The ink was applied twice (that is, first and second inks were applied in an overlapping manner) onto the base material for image recording with the above-described ink jet recording device to record an image. Specifically, first, the ink was applied onto a rectangular region of 5 cm × 5 cm in a 100% solid image form under conditions of a resolution of 1200 dpi × 1200 dpi and an ink amount of 3.0 g/$m^2$ to obtain a first ink layer.

Next, the first ink layer was irradiated with ultraviolet rays (UV) from the above-described LED light source "G5A" under a condition of an exposure amount of 45 mJ/$cm^2$ to cure the first ink layer.

Next, the same ink was applied onto the first ink layer which had been cured (that is, irradiated with UV), under the same conditions as those for forming the first ink layer to obtain a second ink layer.

Next, the second ink layer was irradiated with ultraviolet rays (UV) from the above-described LED light source "G5A" under a condition of an exposure amount of 1,200 mJ/$cm^2$ to cure the second ink layer.

As a result, an image including the first ink layer and the second ink layer was recorded on the base material for image recording, and an image recorded material including the base material for image recording and the image was obtained.

## Evaluation of Lamination Strength (change in evaluation conditions)

A laminate was produced in the same manner as in the production of the laminate in Example 1, except that the conditions of the thermocompression bonding were changed from "130°C, 300 seconds at a pressure of 2 MPa, and then 60 seconds at a pressure of 10 MPa" to "130°C, 60 seconds at a pressure of 4 MPa" (in general, weak thermocompression bonding conditions).

The lamination strength of the obtained laminate was evaluated in the same manner as the evaluation of the lamination strength in Example 1.

The results are shown in Table 5.

The evaluation (change in evaluation conditions) of the lamination strength in Table 5 is an evaluation that is stricter than the evaluation of the lamination strength in Tables 1 to 4, and is an evaluation in which the lamination strength is expressed to be lower (because the thermocompression bonding condition for obtaining the laminate was weak).

## Evaluation of Blocking Resistance

The image recorded material obtained above was evaluated for blocking resistance in the same manner as the evaluation of the blocking resistance in Example 1.

The results are shown in Table 5.

## Evaluation of Jettability of Ink

The ink obtained above was evaluated for jettability in the same manner as the evaluation of the jettability of the ink in Example 1.

The results are shown in Table 5.

[Table 5]

| | | | Molecular weight | Tg (°C) | SP value ($MPa^{1/2}$) | Example 1 | Example 101 | Example 102 | Example 103 | Example 104 |
|---|---|---|---|---|---|---|---|---|---|---|
| Polymerizable monomer | Monomer A | THFA | 156 | -15 | 18.8 | | | | | |
| | | EOEOEA | 188 | -54 | 18.2 | 8.3 | 8.2 | 8.3 | 8.0 | 7.3 |
| | | CHA | 154 | 15 | 17.9 | 45.5 | 45.4 | 45.5 | 44.1 | 40.0 |
| | | IBOA | 208 | 88 | 17.1 | | | | | |
| | | 4-HBA | 144 | -32 | 21.0 | | | | | |
| | | PEA | 192 | 5 | 19.4 | 2.3 | 2.3 | 2.3 | 2.3 | 2.3 |
| | Monomer B | NPGPODA | 328 | 32 | 1.8 | | 0.3 | 0.1 | 2.5 | 10.0 |
| | N-vinyl compound | NVC | 139 | 90 | 19.2 | 29.0 | 28.9 | 28.9 | 28.1 | 25.5 |
| | Other monomers | LA | 240 | -30 | 16.7 | | | | | |
| | | IOA | 184 | -54 | 16.4 | | | | | |
| | | ACMO | 141 | 145 | 22.4 | | | | | |
| | | DVE-3 (bifunctional) | 202 | 10 | 17.2 | 3.0 | 3.0 | 3.0 | 3.0 | 3.0 |
| Colorant (pigment) | | PB15:3 | - | - | - | 1.8 | 1.8 | 1.8 | 1.8 | 1.8 |
| Dispersing agent | | BYK-168 | - | - | - | 1.2 | 1.2 | 1.2 | 1.2 | 1.2 |
| Sensitizing dye | | DETX | - | - | - | 2.0 | 2.0 | 2.0 | 2.0 | 2.0 |
| Photopolymerization initiator | α-aminoketone-type initiator having molecular weight of less than 600 | Omni.910 | 1051 | - | - | 2.8 | 2.8 | 2.8 | 2.8 | 2.8 |
| | | Initiator 4 | 610 | - | - | | | | | |
| | | Initiator 5 | 1782 | - | - | | | | | |
| | Acylphosphine oxide-type initiator | Omni.819 | - | - | - | 2.8 | 2.8 | 2.8 | 2.8 | 2.8 |
| | | TPO-L | - | - | - | | | | | |
| | Other initiators | Omni.369 | 367 | - | - | | | | | |
| Polymerization inhibitor | | TEMPOL | - | - | - | 0.3 | 0.3 | 0.3 | 0.3 | 0.3 |

(continued)

| | | | Molecular weight | Tg (°C) | SP value ($MPa^{1/2}$) | Example 1 | Example 101 | Example 102 | Example 103 | Example 104 |
|---|---|---|---|---|---|---|---|---|---|---|
| Resin T | Containing HEMA | Resin T-1 | - | - | - | 1.0 | 1.0 | 1.0 | 1.0 | 1.0 |
| | | Resin T-2 | - | - | - | | | | | |
| | Not containing HEMA | Resin T-3 | - | - | - | | | | | |
| Weighted average value of Tg | | | | | | 32.7 | 32.6 | 32.7 | 31.8 | 28.8 |
| Content mass ratio [α-aminoketone-type initiator having molecular weight of less than 600/acylphosphine oxide-type initiator] | | | | | | 1.0 | 1.0 | 1.0 | 1.0 | 1.0 |
| Content mass ratio [α-aminoketone-type initiator having molecular weight of less than 600/sensitizing dye] | | | | | | 1.4 | 1.4 | 1.0 | 1.0 | 1.0 |
| Amount of monomer M1 having Tg of 90°C or higher with respect to total amount of ink | | | | | | 29.0 | 28.9 | 28.9 | 28.1 | 25.5 |
| Amount of monomer M2 having Tg of 30°C or lower with respect to total amount of ink | | | | | | 56.1 | 55.9 | 56.1 | 54.5 | 49.6 |
| Content mass ratio [monomer A/all polymerizable monomers] | | | | | | 0.64 | 0.63 | 0.64 | 0.62 | 0.56 |
| Content mass ratio [monomer B/all polymerizable monomers] | | | | | | 0 | 0.003 | 0.001 | 0.03 | 0.11 |
| Content mass ratio [monomer having molecular weight of 215 or less/all polymerizable monomers] | | | | | | 1.00 | 1.00 | 1.00 | 0.97 | 0.89 |
| Content mass ratio [monofunctional monomer/all polymerizable monomers] | | | | | | 0.97 | 0.96 | 0.96 | 0.94 | 0.85 |
| Content mass ratio [N-vinyl compound/all polymerizable monomers] | | | | | | 0.33 | 0.33 | 0.33 | 0.32 | 0.29 |
| Evaluation | Blocking resistance | | | | | 5 | 6 | 6 | 6 | 6 |
| | Lamination strength (changing evaluation conditions) | | | | | 3 | 5 | 5 | 5 | 4 |
| | Jettability | | | | | 5 | 5 | 5 | 5 | 5 |

As shown in Table 5, in Examples 101 to 104 in which the ink contained the monomer B which is a bifunctional acrylate, the lamination strength was more excellent than that in Example 1 in which the ink did not contain the monomer B.

Among Examples 101 to 104, the lamination strength was particularly excellent in Examples 101 to 103 in which the content mass ratio [monomer B/total polymerizable monomer] was more than 0 and 0.10 or less.

## Claims

**1.** An ink jet ink comprising:

a polymerizable monomer; and
an α-aminoketone-type photopolymerization initiator having a molecular weight of 600 or more,
wherein a weighted average value of a glass transition temperature of a homopolymer of the polymerizable monomer is 0°C to 50°C.

**2.** The ink jet ink according to claim 1, further comprising:

an acylphosphine oxide-type photopolymerization initiator,
wherein a content mass ratio of the α-aminoketone-type photopolymerization initiator having a molecular weight of 600 or more to the acylphosphine oxide-type photopolymerization initiator is 0.010 to 1.5.

**3.** The ink jet ink according to claim 1 or 2, further comprising:

a sensitizing dye,
wherein a content mass ratio of the α-aminoketone-type photopolymerization initiator having a molecular weight of 600 or more to the sensitizing dye is 0.010 to 2.0.

**4.** The ink jet ink according to any one of claims 1 to 3,
wherein the polymerizable monomer includes an N-vinyl compound.

**5.** The ink jet ink according to claim 4,
wherein a mass ratio of an amount of the N-vinyl compound to a total amount of the polymerizable monomer is 0.30 or more.

**6.** The ink jet ink according to any one of claims 1 to 5,

wherein the polymerizable monomer includes a monomer M1 having a glass transition temperature of 90°C or higher in a case of being homopolymerized and a monomer M2 having a glass transition temperature of 30°C or lower in a case of being homopolymerized, and
a content of the monomer M1 with respect to a total amount of the ink jet ink is 20% by mass to 50% by mass, and a content of the monomer M2 with respect to the total amount of the inkjet ink is 35% by mass to 65% by mass.

**7.** The ink jet ink according to any one of claims 1 to 6,

wherein the polymerizable monomer includes a monomer A which has a (meth)acryloyl group, has a molecular weight of 215 or less, and has a solubility parameter of 16.5 $MPa^{1/2}$ to 21.5 $MPa^{1/2}$, and
a mass ratio of an amount of the monomer A to a total amount of the polymerizable monomer is 0.50 or more.

**8.** The ink jet ink according to any one of claims 1 to 7,

wherein the polymerizable monomer includes a compound having a molecular weight of 215 or less, and
a mass ratio of an amount of the compound having a molecular weight of 215 or less to a total amount of the polymerizable monomer is 0.80 or more.

**9.** The ink jet ink according to any one of claims 1 to 8,

wherein the polymerizable monomer includes a monofunctional monomer, and
a mass ratio of an amount of the monofunctional monomer to a total amount of the polymerizable monomer is 0.90 or more.

**10.** The ink jet ink according to any one of claims 1 to 9,

wherein the polymerizable monomer includes a compound having two or more (meth)acryloyl groups, and
a mass ratio of an amount of the compound having two or more (meth)acryloyl groups to the total amount of the polymerizable monomer is more than 0 and 0.10 or less.

**11.** The ink jet ink according to claim 7 or 8,

wherein the polymerizable monomer includes a monomer B which is a compound having two or more (meth) acryloyl groups and different from the monomer A, and
a mass ratio of an amount of the monomer B with respect to the total amount of the polymerizable monomer is more than 0 and 0.10 or less.

**12.** The ink jet ink according to any one of claims 1 to 11, further comprising:
a resin T including at least one selected from the group consisting of a fluorinated hydrocarbon group, a polysiloxane group, and a hydrocarbon group having 12 or more carbon atoms.

**13.** The ink jet ink according to claim 12,
wherein the resin T has a structural unit derived from hydroxyethyl methacrylate.

**14.** An image recording method comprising:
a step of applying the ink jet ink according to any one of claims 1 to 13 onto a base material for image recording, containing a polymer including vinyl chloride as a constitutional unit, by an ink jet recording method to record an image.

**15.** A manufacturing method of a laminate, comprising:

a step of obtaining an image recorded material including the base material for image recording and the image by the image recording method according to claim 14; and
a step of laminating the image recorded material and a base material for lamination, containing a polymer including vinyl chloride as a constitutional unit, in an arrangement in which the image in the image recorded material and the base material for lamination face each other, to obtain a laminate.

Europäisches Patentamt
European Patent Office
Office européen des brevets

# EUROPEAN SEARCH REPORT

Application Number
EP 25 16 4938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2011 122063 A (TOYO INK SC HOLDINGS CO LTD) 23 June 2011 (2011-06-23)<br>* paragraph [0018]; claims; examples *<br>----- | 1-15 | INV.<br>C09D11/101<br>B41M5/00<br>C09D11/30<br>C09D11/322 |
| A | EP 2 568 020 A1 (FUJIFILM CORP [JP]) 13 March 2013 (2013-03-13)<br>* paragraphs [0136], [0137]; claims; examples *<br>----- | 1-15 | |

TECHNICAL FIELDS SEARCHED (IPC)
C09D
B41M

The present search report has been drawn up for all claims

| Place of search | Date of completion of the search | Examiner |
|---|---|---|
| Munich | 11 July 2025 | Zeslawski, Wojciech |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 16 4938

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | Publication date |
|---|---|---|---|
| JP 2011122063 A | 23-06-2011 | JP 5621251 B2 | 12-11-2014 |
| | | JP 2011122063 A | 23-06-2011 |
| EP 2568020 A1 | 13-03-2013 | CN 102993827 A | 27-03-2013 |
| | | EP 2568020 A1 | 13-03-2013 |
| | | JP 5546028 B2 | 09-07-2014 |
| | | JP 2013057042 A | 28-03-2013 |
| | | US 2013065029 A1 | 14-03-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011122063 A
- JP 2009197066 A
- WO 2017195428 A
- JP 2007525573 A
- JP 2002012607 A
- JP 2002188025 A
- JP 2003026978 A
- JP 2003342503 A
- JP 2011225848 A
- JP 2009209352 A
- JP 54059936 A
- JP 2003306623 A
- JP 60132767 A
- JP S60132767 A


### Non-patent literature cited in the description


- Industrial Organic Pigments. **W. HERBST** ; **K. HUNGER**. Encyclopedia of Pigments. 2000